(19) Europäisches Patentamt
European Patent Office
Office européen des brevets

(11) **EP 4 281 790 B1**

(12) **EUROPÄISCHE PATENTSCHRIFT**

(45) Veröffentlichungstag und Bekanntmachung des Hinweises auf die Patenterteilung:
**25.12.2024   Patentblatt 2024/52**

(21) Anmeldenummer: **22700607.9**

(22) Anmeldetag: **13.01.2022**

(51) Internationale Patentklassifikation (IPC):
**G01R 31/11** (2006.01)     **G01R 31/42** (2006.01)
**G01R 31/58** (2020.01)

(52) Gemeinsame Patentklassifikation (CPC):
**G01R 31/11; G01R 31/42; G01R 31/58**

(86) Internationale Anmeldenummer:
**PCT/EP2022/050578**

(87) Internationale Veröffentlichungsnummer:
**WO 2022/157053 (28.07.2022 Gazette 2022/30)**

(54) **SYSTEM ZUR ÜBERWACHUNG EINER SPEISELEITUNG EINER AUS EINEM FREQUENZUMRICHTER GESPEISTEN ELEKTRISCHEN MASCHINE**

SYSTEM FOR MONITORING A FEED LINE OF AN ELECTRIC MACHINE WHICH IS FED BY A FREQUENCY CONVERTER

SYSTÈME DE SURVEILLANCE D'UNE LIGNE D'ALIMENTATION D'UNE MACHINE ÉLECTRIQUE ALIMENTÉE PAR UN CONVERTISSEUR DE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2021   DE 102021000284**

(43) Veröffentlichungstag der Anmeldung:
**29.11.2023   Patentblatt 2023/48**

(73) Patentinhaber: **Lapp Engineering AG 6330 Cham (CH)**

(72) Erfinder: **HILSENBECK, Stefan 71144 Steinenbronn (DE)**

(74) Vertreter: **Schmidt, Steffen J. Wuesthoff & Wuesthoff Patentanwälte und Rechtsanwalt PartG mbB Schweigerstrasse 2 81541 München (DE)**

(56) Entgegenhaltungen:
**DE-T5- 112016 006 497**

## Beschreibung

### Gegenstand

Hier ist ein System zur Überwachung einer Speiseleitung einer elektrischen Maschine offenbart, die durch einen Frequenzumrichter gespeist ist. Diese Überwachung ist als Vorrichtung und als Verfahren zu realisieren. Merkmale und Eigenschaften der Vorrichtung und des Verfahrens sind in den Ansprüchen definiert; aber auch die Beschreibung und die Figuren offenbaren Charakteristika der Vorrichtung und des Verfahrens sowie deren unterschiedliche Aspekte und Zusammenhänge.

### Hintergrund

Zur Aufrechterhaltung des Betriebs von elektrisch betriebenen Anlagen und Maschinen ist deren effiziente Wartung ein zunehmender wichtig werdender Faktor. Bei elektrischen Kabeln und Leitungen werden bisher hauptsächlich einerseits eine reaktive Wartung, also im Schadensfall der Austausch von Kabeln / Leitungen oder Verbindern, etc., und andererseits präventive Wartung eingesetzt. Bei letzterer werden Wartungsmaßnahmen und der Austausch von Verschleißteilen nach zuvor festgelegten Intervallen durchgeführt. Für die vorausschauende Wartung werden im laufenden Betrieb Kenndaten der Anlagen und Maschinen gesammelt und ausgewertet. Zur Optimierung der Kosten und der Betriebssicherheit der Anlagen und Maschinen darf die Wartungsmaßnahme weder zu früh (bedeutet hohe Kosten) noch zu spät (bedeutet Ausfall der Anlagen und Maschinen) erfolgen.

In industriellen elektrischen Anlagen und Maschinen wirken teilweise sehr starke Umwelteinflüsse auf Leitungen. In bewegten und zwangsgeführten Anwendungen, z.B. in einer Energieführungskette sind Leitungen erheblichen Biege- und Walkbelastungen ausgesetzt. Bei Roboter-Anwendungen wirken zusätzlich Torsionskräfte. Zu diesen Leitungen zählen auch die hier behandelten Speiseleitungen frequenzumrichtergespeister elektrischer Maschinen. Auch wenn die Leitungen speziell für diese Art der Belastung ausgelegt sind, gelten sie dennoch als Verschleißteil. Typische Fehlerbilder solcher Leitungen sind: Aderbruch, Mantel- oder Isolierungs-Beschädigung, Geometrieverschiebung im Aufbau der Leitung sowie die Beschädigungen von Abschirmelementen. Diese Fehler führen dazu, dass die Speisung des Verbrauchers (der elektrischen Maschine) mit Betriebsenergie vermindert oder gar unterbrochen wird. Solche ungeplanten Degradierungen oder Ausfälle durch externe Einflüsse sind in der Regel kostspielig, da sie in industriellen Maschinen und Anlagen o.ä. zu Stillständen mit entsprechenden Betriebs-/Produktionsausfällen oder auch Beschädigungen an den Maschinen und Anlagen führen können.

### Stand der Technik

Aus der DE 1 038 140 ist eine Ader eines Kabels mit saugfähigem Isolationsmaterial von einer Tränk-Substanz, hier Paraffin, umgeben. Bei Temperaturänderung ändert sich die Dielektrizitätskonstante. Hiermit werden Temperatur und Fehlerort durch Laufzeitmessung gegen einen Referenzleiter bestimmt. Dies erfordert einen von heutigen Kabeln erheblich abweichenden Kabelaufbau, der überdies nennenswerte Probleme bei der Zertifizierung (z.B. Brandsicherheit) bereitet. Die hier beschriebene Anordnung hat an beiden Kabelenden ein Auswertegerät installiert.

Ein Zeit-Bereichs-Reflektometer (TFR) ist eine Vorrichtung zum Analysieren einer elektrischen Leitung auf Impedanz-Veränderungen, um anhand dieser Impedanz-Veränderungen damit einher gehende Anomalien zu identifizieren. Ein TDR speist einen elektrischen Energie-Impuls in eine elektrische Leitung ein. Wenn der elektrische Impuls entlang der Länge der elektrischen Leitung auf eine Impedanz-Veränderung trifft, wird ein Teil der Energie des Impulses zurück zu dem Zeit-Bereichs-Reflektometer reflektiert. Durch Auswerten, zum Beispiel, der Amplitude und der Polarität der zurück geworfenen Welle kann ein Maß der Impedanz-Veränderung bestimmt werden. Zusätzlich kann durch das Messen der Laufzeit des Impulses der Ort der Impedanz-Veränderung ebenfalls bestimmt werden. Typische Anomalien, die eine Impedanz-Veränderung verursachen können, beinhalten Spleiße, Schäden, neutrale Korrosion, gebrochene Leiter, etc., sind aber nicht darauf begrenzt.

Die US Patentanmeldung Nr. 12/820886 "Online Time Domain Reflectometer System" betrifft ein in situ zu verwendendes Zeit-Bereichs-Reflektometer, das zu betreiben ist, ohne dass die elektrische Leitung außer Betrieb zu nehmen wäre.

Für Anschluss- oder Steuerleitungen haben sich im Grunde zwei Ansatzgruppen etabliert: Zum einen eine Messung mit zusätzlichem Sensorelement in der Leitung, in Form einer Dehn-Ader, welche bei Überlastung bricht, oder eine Temperatur / Feuchtigkeitssensorik, siehe hierzu auch DE 20 2017 102 410 U1, DE 10 2013 227 051 B4, DE 10 2018 204 171 A1. Zum anderen ein Freischalten der Adern zu Anlagen-Stillstandszeiten und halbautomatisierter Messung des Widerstands, TDR, Kapazität, Durchschlagspannungsfestigkeit, siehe hierzu auch EP 3 199 960 A1.

Die DE 10 2020 111 743 A1 betrifft ein eine integrierte Schaltung und ein Verfahren zum Überwachen eines Schalttransistors und ein Motorsystem. Dazu wird eine Überwachungsschaltung verwendet, die auf einer monolithischen integrierten Schaltung angeordnet ist, und ein Ausgangssignal eines ersten Schalttransistors auf einen ersten Ausgangsflankenübergang an einem Überwachungsanschluss überwacht. Eine Zeitmessschaltung auf der integrierten Schaltung dient dazu, eine erste Zeitverzögerung zwischen einem ersten Eingangsflankenübergang eines ersten Ansteuersignals und dem ersten Ausgangsflankenübergang zu messen. Dabei ist das erste Ansteuersignal konfiguriert, eine Zustandsänderung des ersten Schalttransistors zu bewirken. Eine auf der integrierten Schaltung angeordneten Analyseschaltung dient dazu, die gemessene erste Zeitverzögerung mit einem ersten vorbestimmten Schwellenwert zu vergleichen, um ein erstes Vergleichsergebnis zu bilden, und einen ersten Fehlerzustand basierend auf dem ersten Vergleichsergebnis anzuzeigen.

Das Dokument DE 11 2016 006 497 T5 offenbart einen elektronischen Umrichter, der steuerbare Schalter und ein Steuersystem zum Betreiben der steuerbaren Schalter umfasst. Das Steuersystem ist dazu ausgelegt, die steuerbaren Schalter zu steuern, damit mindestens ein Testspannungsimpuls erzeugt wird. Der elektronische Umrichter umfasst einen Spannungssensor zum Detektieren einer reflektierten Spannung, die durch eine Reflexion des Testspannungsimpulses in einem elektrischen System, das mit dem elektronischen Umrichter verbunden ist, verursacht wird. Das Steuersystem ist dazu ausgelegt, den Betrieb des elektronischen Umrichters zumindest teilweise gemäß Informationen basierend auf der Detektion der reflektierten Spannung zu steuern. Die Informationen können zum Beispiel zum Bestimmen von unzulässigen Spannungsimpulslängen, die reflexionsbasierte Überspannungen verursachen würden, und/oder zum Detektieren von Fehlern, wie etwa Kurzschlüssen und Erdfehlern, verwendet werden.

Die DE 101 12 844 A1, US 6,657,437 B1, EP 2 157 438 A1, DE 10, 2010 000 249 A1, DE 10 2005 055 429 A1, DE 10 2018 204 173 A1, DE 10 2018 204 171 A1, DE 10 2018 204 177 A1, und DE 10 2018 204 174 A1 betreffen weiteren technologischen Hintergrund.

Insbesondere bei Motoranschluss-/Servoleitungen werden oft kapazitätsoptimierte und symmetrische Leitungen seitens der Frequenzumrichter-Hersteller zum Einbau und Betrieb der jeweiligen Maschinen vorgeschrieben. Dies soll die Ausbreitung von Common-Mode-Strömen / Störungen auf Schutzleiter und Potential-Ausgleichsleitungen infolge des Betriebs der Frequenzumrichter begrenzen. Ein Eingriff in den Leitungsaufbau, um z.B. Opferadern oder Sensorik in die Leitung einzubringen, ist bei diesen Leitungstypen somit unerwünscht / unmöglich.

Gesucht ist daher eine kostengünstige, universelle Lösung, die Motoranschluss- / Servolei-tungen ohne die Einbringung zusätzlicher Sensorelemente während des Betriebs kontinuierlich zu überwachen in der Lage ist, und so eine hohe Anlagenverfügbarkeit sicherstellt.

Technisches Problem

Ausgehend hiervon soll eine robuste, effiziente und treffsichere Untersuchung und Bewertung und Ausgabe der Ausfallwahrscheinlichkeit von bewegten Speiseleitungen frequenzumrichtergespeister elektrischer Maschinen bereitgestellt werden.

Vorgeschlagene Lösung

Zur Lösung dieses Problems werden Vorrichtungen oder Verfahren mit den Merkmalen bzw. Schritten der unabhängigen Ansprüche vorgeschlagen.

Eine Vorrichtung zur Überwachung einer Speiseleitung einer frequenzumrichtergespeisten elektrischen Maschine dient dazu, Ausfall, Verschleiß und/oder Alterung der elektrischen

Speiseleitung zu prädizieren. Dabei ist die elektrische Speiseleitung dazu eingerichtet und verlegt, eine elektrische Maschine in einer industriellen Maschine oder Anlage oder in einem Land- oder Luftfahrzeug mit einem Frequenzumrichter zu verbinden. Der Frequenzumrichter ist dazu eingerichtet und bestimmt, durch die elektrische Speiseleitung die elektrische Maschine mit einer ein- oder mehrphasigen Wechselspannung mit vorzugsweise veränderbarer Spannungs-Amplitude und Drehfeldfrequenz zu beschicken, wobei eine Veränderung von Pulsdauer/Modulationstiefe und/oder Spannungs-Amplitude der Wechselspannung dazu dient, eine Drehzahl oder ein Drehmoment der elektrischen Maschine zu verändern. Der Frequenzumrichter ist dazu eingerichtet und bestimmt, jede Phase der Wechselspannung als Abfolge von Rechteckpulsen mit hoher Flankensteilheit zur Speisung der elektrischen Maschine bereitzustellen. Eine Erfassungs- und Auswerteeinrichtung ist dazu eingerichtet und programmiert, an wenigstens einer oder zwischen wenigstens zwei Adern der elektrischen Speiseleitung einen Verlauf der Spannungssignale zu erfassen und zu verarbeiten, um aus dem Verlauf der Spannungssignale ein Maß für eine Auftrittswahrscheinlichkeit eines Ausfalls, Verschleißes und/ oder einer Alterung der Leitung zu erhalten, und das erhaltene Maß an einer Ausgabe auszugeben.

Als "elektrische Maschine" sind hier innen- oder außenlaufende Motoren und Generatoren verstanden. Auch im Motor-Generator-Wechselbetrieb betriebene Maschinen sind hier erfasst. Auch ist unerheblich, ob eine solche elektrische Maschine als rund laufende Maschine oder als Linearmaschine ausgestaltet ist. Insbesondere sind hier elektrische Maschinen verstanden, die als Synchron- oder Asynchron-Maschinen betrieben werden, und die durch Speisung aus Frequenzumrichtern mit variabler Drehzahl betrieben werden. Neben der Drehzahl (upm) sind bei entsprechender Ausgestaltung der Regelung des Frequenzumrichters auch Drehmoment oder Speisestrom der elektrischen Maschine zu variieren. Im Fall von Linearmotoren oder Schrittmotoren können durch die Variation der Pulsansteuerungen exakte Winkelpositionen angefahren werden.

Mit einer solchen Vorrichtung und einem weiter unten dargestellten Verfahren ist eine Leitungs- und Kabeldiagnose in Anlagen und Maschinen zu realisieren. Die Vorrichtung und das Verfahren eignen sich insbesondere für Anschluss-/Steuer- oder Servo-Leitungen, die in industriellen Maschinen und Anlagen oder in Land-, See- oder Luftfahrzeugen eingesetzt werden. Alle diese unterschiedlichen, metallisch leitenden (Kupfer-)Leitungen und -Kabel mit einer oder mehreren Adern, Aderpaaren (gleichen oder unterschiedlichen Querschnitts), Einzel- oder Sammelschirmung, Isolierschichten und/oder Ummantelungen, im Unterschied zu Lichtfaserleitungen, sind hier als "elektrische Leitung", "Speiseleitung" oder "Leitung" bezeichnet. Eine solche Speiseleitung ist für eine einphasige elektrische Maschine als Zweileitersystem aus einer Leitung mit im wesentlichen konstantem Querschnitt und einer Masseleitung ausgestaltet. Hier sei verstanden, dass die Pulsdauer der Ansteuerpulse aus dem Frequenzumrichter groß ist gegen die Querausdehnung der Leitung. In einem längshomogenen Zweileiter (mit konstantem Querschnitt) pflanzt sich der Spannungs-Puls als reine transversale Welle in Richtung der Längsausdehnung der Leitung fort. Entsprechendes gilt für eine mehrphasige elektrische Maschine. So wird zum Beispiel eine dreiphasige Maschine (zum Beispiel in Dreieckschaltung) durch eine drei-adrige Leitung und einem Masseanschluss gespeist. Bei einem Dreileitersystem sind ein Außenleiter ein Neutralleiter, eine Schutzerde und ggfs. ein Geflechtschirm vorgesehen. Ein Neutralleiter wird bei Stern-/Dreieckbetrieb nicht benötigt.

Da die Speiseleitung zwischen dem Frequenzumrichter und der elektrischen Maschine eine endliche Länge hat und am Ende nicht offen ist - dort ist die elektrische Maschine angeschlossen - treten je Anpassung der Leitungsimpedanz an die Maschinenwicklungsimpedanz zu den Spannungs-Pulsen aus dem Frequenzrichter Reflexionen und durch die Reflexionen überlagerte Pulse auf. Nur für den Fall, dass die Leitung maschinenseitig mit ihrem Wellenwiderstand abgeschlossen ist, ist die Leitung dort reflexionsfrei. In allen anderen Fällen (auch bei Leerlauf und Kurzschluss) treten Reflexionen auf. Durch den üblicherweise nicht an den Wellenwiderstand der Leitung angepassten Abschluss der Leitung entstehen Reflexionen am Leitungsende. Das Verhältnis der Amplitude der rücklaufenden Pulse zur Amplitude der hinlaufenden Pulse wird als Reflexionsfaktor bezeichnet. Der Reflexionsfaktor ist bei neuer/ idealer Speiseleitung an jeder beliebigen Stelle der Leitung entlang ihrer Länge gleich, da der Wellenwiderstand entlang der idealen Leitung homogen ist. Hierfür wird der Reflexionsfaktor in der jeweiligen Entfernung von der Maschine aus betrachtet. Dabei ist der Reflexionsfaktor an einer Stelle entlang der Länge der Leitung definiert ist durch das Verhältnis der Amplituden der rücklaufenden Spannungswelle zur hinlaufenden Spannungswelle an dieser Stelle.

Eine reale Speiseleitung hat für den Wechselspannungs- oder Pulsbetrieb einen Induktivitätsbelag und, bedingt durch ohmsche Anteile, einen seriellen Widerstandsbelag. Zusätzlich hat eine reale Speiseleitung auch einen (Quer-)Kapazitätsbelag mit einem Leitwertbelag im Dielektrikum. Diese vier Faktoren definieren in erster Linie den komplexen Widerstand der Leitung. Durch die externen Einflüsse kann sich der komplexe Widerstand der Leitung entlang ihrer Länge lokal ändern.

Aus dem entlang der Längserstreckung der Leitung vorhandenen, und sich durch Degradation der Leitung nicht linear ändernden Reflexionsfaktor ergibt sich das Reflexionsprofil der Leitung. Dieses sich aus dem aus dem erfassten Verlauf der Spannungssignale ergebende Reflexionsprofil wird durch die Erfassungs- und Auswerteeinrichtung bestimmt.

Der Frequenzumrichter versorgt die elektrische Maschine (Synchron-, oder Asynchronmaschine) je nach Last drehzahlregelbar mit Strom. Dazu wandelt der Frequenzumrichter die gleichförmige Netz-Wechselspannung (z.B. 380 Volt, 50 Hertz) in eine gepulste Wechselspannung mit veränderbarer Amplitude und Pulsdauer. Durch die Steuerung von Pulsdauer und Spannung ist eine stufenlose Regelung der Drehzahl oder des Drehmoments der elektrischen Maschine möglich. Der Frequenzumrichter hat eingangsseitig eine Gleichrichter-Brückenschaltung.

Diese Gleichrichter-Brückenschaltung wandelt die eingehende Netz-Wechselspannung (z.B. eine oder mehr, z.B. drei Phasen in eine pulsierende Gleichspannung. Diese pulsierende Gleichspannung wird einem als Zwischenkreis bezeichneten Gleichspannungsstromkreis durch einen Pufferkondensator und ggf. eine Induktivität geglättet.

Eine dem Zwischenkreis nachgeschaltete steuerbare Wechselrichterschaltung wandelt die geglättete Spannung aus dem Zwischenkreis in eine zum Beispiel dreiphasige Drehspannung (u, v, w). Jede Phase hat Rechteckpulse mit kurzer Perioden-/Pulslänge (z.B. ca. 20 $\mu$s - ca. 500 $\mu$s), einer hohen Flankensteilheit (z.B. ca. 100 V/$\mu$s - ca. 1000 V/$\mu$s) und mehreren hundert Volt Puls-Amplitude (z.B. ca. 120 V - ca. 560 V) zur Speisung der elektrischen Maschine. Hierfür sind in der Wechselrichterschaltung gesteuerte Halb- (oder Voll-)brücken-Schaltungen mit GTO-Thyristoren oder IGBT-Transistoren vorgesehen. Deren zeit- und phasenrichtige Ansteuerung definiert Drehzahl, Drehmoment oder Speisestrom der elektrischen Maschine.

Es sei verstanden, dass auch Anlagen mit Betriebsspannungen im Bereich Kleinspannung (bis 50 V AC, bis 120 V DC), Niederspannung (400 V, 500 V, 690 V) Mittelspannung und Hochspannung (3000 V, 3300 V, 5000 V, 5500 V, 6000 V, 6300 V, 6600 V, 10000 V, 10500 V, 11000 V) mit der vorliegenden Lösung auszustatten sind.

Die hier vorgestellte Lösung basiert darauf, dass der Zustand der Leitung und damit auch das Maß für deren Ausfallwahrscheinlichkeit, sich aus den in die elektrische Speiseleitung durch den Frequenzumrichter eingespeisten Rechteck-Spannungs-Pulsen durch die Erfassungs- und Auswerteeinrichtung extrahieren lässt. Dies erübrigt einen externen oder separaten Signalgenerator. Das Reflexionsprofil der Leitung ist (bei entsprechender Flankensteilheit der Rechteckpulse aus dem Frequenzumrichter) mittels der Erfassungs- und Auswerteeinrichtung auszuwerten. Der Erfassungs- und Auswerteeinrichtung ist in einer Variante ein Signalprozessor, dem ein Analog-Digital-Wandler eingangsseitig zugeordnet. In einer weiteren Variante ist die Erfassungs- und Auswerteeinrichtung durch Komponenten gebildet, die Teil des Frequenzumrichters sind. In dem Reflexionsprofil der Leitung sind damit Spannungs-Reflexionen infolge von Störstellen entlang der Speiseleitung zu der angeschlossenen elektrischen Maschine zu erfassen, da sich die Störstellen als Spannungssprünge in einer Phase (gemessen gegen Masse) oder zwischen zwei Phasen bemerkbar machen. Diese Spannungssprünge treten bei im Wesentlichen rechteckförmigen Pulsen am Übergang des Pulsanstiegs in das Pulsplateau auf. Diese Spannungssprünge sind - bei gegebener Leitung - umso ausgeprägter, je größer der zeitliche Gradient des Spannungs-Pulses ($\Delta U/\Delta t$) aus dem Frequenzumrichter ist; sie werden in der Erfassungs- und Auswerteeinrichtung verarbeitet.

Das Reflexionsprofil zeigt am Ende des steilen Pulsanstiegs eine Abnahme des Gradienten bei Übergang in das Pulsplateau. Das Pulsplateau hat anfänglich einen ersten Flachabschnitt. Am Ende des ersten Flachabschnitts folgt ein weiterer deutlicher Pulsanstieg auf den zweiten Flachabschnitt des Pulsplateaus. Die Zeitdauer des ersten Flachabschnitts zwischen dem Ende des steilen Pulsanstiegs zu dem Pulsanstieg am Ende des ersten Flachabschnitts ist bei einer intakten, z.B. neuen Leitung repräsentativ für deren Länge zwischen dem Frequenzumrichter und der elektrischen Maschine. Diese Zeitdauer wird in einer Variante der Vorrichtung durch die Erfassungs- und Auswerteeinrichtung erfasst und ausgewertet.

Vom Ende des steilen Pulsanstiegs beim Übergang in den ersten Flachabschnitt beeinflusst die Leitungskapazität den Spannungsverlauf des Pulses. Im ersten Flachabschnitt verläuft der Wellenwiderstand der Leitung im Wesentlichen konstant. Der Pulsanstieg am Ende des ersten Flachabschnitts repräsentiert die Reflexion des Pulses an der elektrischen Maschine, genauer gesagt den Impedanz-Sprung an den Ständerspulen der elektrischen Maschine; er wird in einer Variante der Vorrichtung durch die Erfassungs- und Auswerteeinrichtung erfasst und ausgewertet.

Dieser zeitliche Abstand zwischen dem Übergang in den ersten Flachabschnitt und dem Spannungs-Pulsanstieg am Ende des ersten Flachabschnitts, sowie der Spannungsverlauf innerhalb dieses Abschnitts ist bei einer in Betrieb befindlichen Leitung ein Maß für den Ort und das Ausmaß eines Ausfalls, Verschleißes und/oder einer Alterung der Leitung. Eine solche Degradation der Leitung entlang der Strecke führt zu einem zeitlich früheren der späteren Pulsanstieg am Ende des ersten Flachabschnitts. Dies ist darauf zurückzuführen, dass zum Beispiel der (reale oder komplexe) Widerstand der Leitung im Bereich einer Leitungsschwächung sich ändert, zum Beispiel steigt. Eine solche Leitungsschwächung kann hervorgerufen sein durch intensives Walken, Biegen, Tordieren oder Knicken der Leitung an einer Stelle oder in einem Bereich, zum Beispiel in einer Schleppkette oder im Gelenk eines Roboterarms. An diesem erhöhten Widerstand / der erhöhten Impedanz der Leitung an dieser Stelle oder in diesem Bereich wird der Puls des Frequenzumrichters reflektiert und führt zu dem Pulsanstieg an der Störstelle der Leitung innerhalb des ersten Flachabschnitts. Diese Verkürzung / Verlängerung des ersten Flachabschnitts bis zum Spannungs-Pulsanstieg ist indikativ für den Ort der Degradation der Leitung; sie wird in einer Variante der Vorrichtung durch die Erfassungs- und Auswerteeinrichtung erfasst und ausgewertet.

Bei einem Leitungsbruch steigt der Spannungs-Puls steil bis an die maximale Amplitude an. Von einem Leitungsbruch (Unterbrechung der Energieübertragung an die elektrische Maschine) ist auszugehen, wenn die Leitung eine elektrisch kürzere Länge hat, also aus dem Reflexionsprofil der Ort der Schädigung nicht das Ende der Leitung ist; diese elektrisch kürzere Länge wird in einer Variante der Vorrichtung durch die Erfassungs- und Auswerteeinrichtung erfasst und ausgewertet.

Ein sanfter, über die Betriebsdauer zunehmender und zunehmend steilerer Anstieg der Spannungsamplitude innerhalb dem ersten Flachabschnitt gegenüber dem initial erfassten Verlauf der Spannungssignale ist indikativ für den Ort der Degradation bei mechanischer Beanspruchung der Leitung; er wird in einer Variante der Vorrichtung durch die Erfassungs- und Auswerteeinrichtung erfasst und ausgewertet.

In einer Variante ist in der Vorrichtung die Erfassungs- und Auswerteeinrichtung dazu ausgebildet und eingerichtet, einen über die Betriebsdauer abnehmenden und/oder steileren Abfall aus dem ersten Flachabschnitt gegenüber dem initial erfassten Verlauf der Spannungssignale als repräsentatives Maß für den Ort oder den Bereich der Degradation der Speiseleitung zu werten.

In einer Variante ist in der Vorrichtung der Erfassungs- und Auswerteeinrichtung eine ein Maß für eine Drehzahl, ein Drehmoment oder eine Anzahl von Umdrehungen nach einem Anlaufen der elektrischen Maschine liefernde Datenerfassung zugeordnet. In einer Variante ist zusätzlich oder alternativ die Erfassungs- und Auswerteeinrichtung dazu eingerichtet und ausgestaltet, ein Erfassen und Auswerten des Verlaufs der Spannungssignale bei einer vorzugebenden Drehzahl der elektrischen Maschine zu beginnen. Somit wird die Messung genauer sein, da immer bei einem definierten Referenzwert der Drehzahl, des Drehmoments usw. gemessen wird.

In einer Variante ist in der Vorrichtung die Erfassungs- und Auswerteeinrichtung dazu eingerichtet und ausgestaltet, ein Erfassen und Auswerten des Verlaufs der Spannungssignale zwischen zwei Phasen in einem Zeitabschnitt maximaler Differenz der Spannung zwischen beiden Phasen auszuführen. Dies verbessert ebenfalls die Qualität und die Genauigkeit der Messung.

In einer Variante ist in der Vorrichtung die Erfassungs- und Auswerteeinrichtung dazu eingerichtet und ausgestaltet, mit einem Schrittmotor als elektrische Maschine verbunden zu sein.

Als Schrittmotor kann die elektrische Maschine in einer Bauform als Reluktanz-, Permanentmagnet-, oder als Hybrid-Schrittmotor ausgestaltet sein, der als 2-, 3 oder 5-phasige, uni- oder bipolar im Normal-, Wavedrive- oder Halbschritt-, oder Mikroschritt-Betrieb anzusteuernde Maschine ausgestaltet ist, und/oder welcher aufgrund einer hohen Polzahl dazu ausgebildet ist, sehr genaue Winkelpositionen anzufahren.

Der Frequenzumrichter kann einen Schrittmotorcontroller umfassen, welcher dazu ausgebildet ist, durch Schalten steilflankiger Rechteckpulse einen Schrittmotor zu betreiben.

In einer Variante betrifft die vorliegende Lösung ein Anordnung umfassend einen elektrischen Motor, eine Speiseleitung des elektrischen Motors, angeordnet zwischen dem elektrischen Motor und einem Frequenzumrichter, der dazu eingerichtet und bestimmt ist, durch die elektrische Speiseleitung die elektrische Maschine mit einer ein- oder mehrphasigen Wechselspannung mit vorzugsweise veränderbarer Spannungs-Amplitude und Drehfeldfrequenz zu beschicken, wobei eine Veränderung von Pulsdauer/Modulationstiefe und/oder Spannungs-Amplitude der Wechselspannung dazu dient, eine Drehzahl oder ein Drehmoment der elektrischen Maschine zu verändern. Der Frequenzumrichter ist dazu eingerichtet und bestimmt, jede Phase der Wechselspannung als Abfolge von Rechteckpulsen mit hoher Flankensteilheit zur Speisung der elektrischen Maschine bereitzustellen. Eine Erfassungs- und Auswerteeinrichtung ist dazu eingerichtet und programmiert, an wenigstens einer oder zwischen wenigstens zwei Adern der elektrischen Speiseleitung einen Verlauf der Spannungssignale zu erfassen und zu verarbeiten, um aus dem Verlauf der Spannungssignale ein Maß für eine Auftrittswahrscheinlichkeit eines Ausfalls, Verschleißes und/ oder einer Alterung der Leitung zu erhalten, und das erhaltene Maß an einer Ausgabe auszugeben.

Die Erfassungs- und Auswerteeinrichtung ist in einer weiteren Variante dazu eingerichtet, zum Beispiel durch Auswerten von induktiven und/oder kapazitiven Widerstandsbelägen der Leitung, Fehlerarten "Beeinträchtigung der Isolationsschicht" sowie "beginnender Aderbruch" zu unterscheiden.

Eine Variante zur Ermittlung eines Maßes für den Ort und des Ausmaßes eines Ausfalls, Verschleißes und/oder einer Alterung der Leitung arbeitet mit einer Vorrichtung der oben beschriebenen Art, um für die Leitung aussagekräftige Charakteristika bereitzustellen. In einer Betriebsphase des Verfahrens werden die Charakteristika der Leitung ermittelt (und ggf. abgespeichert), und mit jeweils zugehörigen abgespeicherten Schwellenwerten sowie deren Anzahl abgespeicherter zulässiger Über-/Unterschreitungen, und /oder einem Messprofil mit einem Referenz-Reflexionsprofil verglichen. Dies geschieht mit folgender Rechenvorschrift:

$$Char = \int_0^{L_{sl}} \left( U_{Puls_{akt(l)}} - U_{Puls_{ref(l)}} \right)^2 dl$$

Dabei ist *Char* das Integral über die quadrierte Differenz der aktuellen Spannung des Pulses $U_{Puls_{akt(l)}}$ während des Betriebs und der Referenz-Spannung $U_{Puls_{ref(l)}}$ über die Länge 0 ... $L_{sl}$ der Speiseleitung. Mit anderen Worten wird das ursprüngliche Reflexionsprofil von der aktuellen Kurve subtrahiert, quadriert und über die Länge der Speiseleitung integriert. So wird bildlich der Flächeninhalt der Differenz aus beiden Kurven in einer Variante der Vorrichtung durch die Erfassungs- und Auswerteeinrichtung erfasst und ausgewertet und berechnet.

Alternativ oder zusätzlich werden in einer Variante des Verfahrens an entsprechenden Leitungen und unter entsprechenden Bedingungen in der Vergangenheit gemessene Degradationsverläufe gespeichert. Diese gespeicherten Degradationsverläufe weisen aussagekräftige Abschnitte oder Stellen auf und reichen vorzugsweise von der Inbetriebnahme der Leitung bis zu deren Versagen. Durch Adaption dieser gespeicherten Degradationsverläufe mittels entsprechender rechnerischer Streckung/Stauchung, Neigung, Verschiebung um jeweilige Veränderliche anhand der aussagekräftigen Abschnitte oder Stellen an einen aktuellen, aber noch nicht beim Versagen der Leitung angelangten Degradationsverlauf einer Leitung wird für deren Versagen oder ein anderes aussagekräftiges Ereignis in der Lebensdauer der Leitung ein Zeitraum oder ein Zeitpunkt, und ggf. eine Wahrscheinlichkeit ermittelt, zu dem dieses Versagen oder das Ereignis eintritt. Zusätzlich oder anstelle der rechnerischen Streckung/ Stauchung, Neigung, Verschiebung um jeweilige Veränderliche ist auch rechnergestützte Mustererkennung einsetzbar, um aus charakteristischen Abschnitten oder Stellen eines aktuellen, aber noch nicht beim Versagen der Leitung angelangten Degradationsverlauf einer Leitung im Vergleich zu einem oder mehreren gespeicherten Degradationsverläufen eine Prädiktion eines Versagens oder eines anderen aussagekräftigen Ereignisses in der Lebensdauer der Leitung zu liefern. Diese Berechnungen / rechnergestützten Mustererkennungen werden in einer Variante der Vorrichtung durch die Erfassungs- und Auswerteeinrichtung erfasst und ausgewertet.

In einer Variante der Vorrichtung zur Überwachung einer elektrischen Speiseleitung wird in der Betriebsphase bestimmt, ob das jeweilige Charakteristikum der Leitung unterhalb oberer und/ oder oberhalb unterer Schwellenwerte liegt. Im Ja-Fall wird das zeitlich nächste jeweilige Charakteristikum ermittelt, und im Nein-Fall wird ein Zähler zum Vergleich mit der jeweiligen Anzahl abgespeicherter zulässiger Über-/Unterschreitungen ggf. innerhalb einem vorgegebenen Zeitintervall, erhöht.

Im Erreichensfall wird ein Alarm aktiviert/ausgegeben.

In einer Variante der Vorrichtung zur Überwachung einer elektrischen Speiseleitung wird in der Betriebsphase abhängig von der Zahl der aktivierten Alarme die Auftrittswahrscheinlichkeit des Ausfalls, Verschleißes und/oder der Alterung der Leitung als gestiegen signalisiert.

In einer Variante der Vorrichtung zur Überwachung einer elektrischen Speiseleitung wird in der Betriebsphase abhängig davon, wie oft ein Alarm aktiviert wird, die Auftrittswahrscheinlichkeit des Ausfalls, Verschleißes und/oder der Alterung der Leitung in verbleibende Schaltzyklen, restliche verbleibende Betriebszeit/Lebensdauer umgerechnet, indem die Charakteristika mit Referenz Charakteristika aus der Vergangenheit, zum Beispiel aus einem Testlauf oder anderen im Betrieb befindlichen oder gewesenen Leitungen in Bezug gesetzt wird.

Eine solche Vorrichtung erlaubt eine (quasi-)kontinuierliche Überwachung insbesondere von bewegten Speiseleitungen elektrischer Maschinen in industriellen Geräten und Anlagen. Aber auch unbewegte Leitungen z.B. in aggressiver Umgebung sind mit dieser Vorrichtung vorausschauend zu überwachen. Damit ist eine kontinuierliche oder Intervall-Überwachung von unter externen Einflüssen stehenden Speisekabeln in industriellen Maschinen und Anlagen oder in Land- oder Luftfahrzeugen zu realisieren. Die Vorrichtung erlaubt auch die Überwachung einer Speiseleitung eines Servomotors zum Beispiel einer Werkzeugmaschine, eines (mehrachsigen) Bearbeitungszentrums, eines Portaloder Armroboters zur Vorhersage von Ausfalls-, Verschleiß- und Alterungserscheinungen der Leitung. Das Maß für die Auftrittswahrscheinlichkeit des Ausfalls, Verschleißes und/oder der Alterung der Leitung kann kontinuierlich oder mit wiederholten Probennahmen, auch im laufenden Betrieb der Maschine / Anlage ausgewertet werden. Das Maß für die Auftrittswahrscheinlichkeit kann als Funktion aus Messwerten der Signalform gebildet werden. Die Signalform ist dabei in einer Variante der Verlauf der Speisespannung aus dem Frequenzumrichter in die elektrische Maschine. Die Signalform der Speisespannung wird dabei in einer Variante am Ausgang des Frequenzum richters, also am Eingang der Speiseleitung zu der elektrischen Maschine erfasst. In einem ersten Messzeitraum (unmittelbar) nach der Installation der Leitung kann eine initiale Signalform der durch die Leitung zu der elektrischen Maschine fließenden Speisespannung erfasst werden, die dann mit später folgenden Signalformen der Speisespannung während des Betriebs verrechnet wird, um das Maß für die Auftrittswahrscheinlichkeit des Ausfalls, Verschleißes und/oder der Alterung der Leitung zu ermitteln. Diese initiale Signalform der durch die Leitung zu der elektrischen Maschine fließenden Speisespannung wird abgespeichert und dient als Referenz.

Die Festlegung der in der Vorrichtung implementierten Komponenten und Programmierung zur Erfassung und Auswertung der Funktion aus Messwerten der Signalform kann abhängig von der Art der Leitung, dem Einsatzort und -zweck der Leitung, bewegte oder unbewegte Leitung, Umgebungsatmosphäre, etc. bestimmt sein. In einer Variante wird die Signalform der aus dem Frequenzumrichter gelieferten Pulssignale zum Betrieb der elektrischen Maschine, also das Nutzsignal ausgewertet. So ist die kontinuierliche oder Intervall-Überwachung bzw. -Probennahme besonders einfach und ohne Auswirkung auf den Betrieb der elektrischen Maschine möglich. Zum einen steht so die Leitung ausschließlich für den laufenden Anlagen-Betrieb zur Verfügung. Zum anderen findet auch keine Konkurrenz/Störung der über die Leitung versendeten Nutzsignale des laufenden Betriebs durch eingespeiste Diagnosedaten statt. Es ist in einer Variante jedoch auch möglich, anstelle der Pulssignale zum Betrieb der elektrischen Maschine elektrische Energie aus dem Zwischenkreis durch die Wechselrichterschaltung in ein dediziertes Mess-Signalpaket umzuformen, auszugeben und auszuwerten.

Die mit der Vorrichtung / dem Verfahren gewonnenen Daten dienen zur Vorhersage von Ausfalls-, Verschleiß- und Alterungserscheinungen der Leitung.

Die hier vorgestellten Varianten der Vorrichtung und des Verfahrens werten die gewonnenen Daten im laufenden Anlagen-Betrieb aus. Aus diesen Daten wird ein Maß ermittelt, das zur Auslösung einer vorausschauenden Wartung der elektrischen Leitung heranziehbar ist. Mit der Vorrichtung und dem Verfahren lassen sich der Zustand der Leitung bewerten und ggf. auch Schwachstellen beseitigen, bevor sie zum Ausfall der Leitung mit allen negativen Konsequenzen führen. Diese Diagnose der Leitung ist für die Leitung zerstörungsfrei.

Unter externen Einflüssen auf die Speiseleitung sind elektromagnetische Felder, mechanischer Stress, Verformungen (Biegen, Knicken, Dehnen, Stauchen, Torsion, etc.), Temperaturänderung, Feuchtigkeit, aggressive Atmosphäre, Öl-, Halogen-, oder Salzwasser-Einwirkung oder dergl.) verstanden.

Die hier vorgestellten Varianten sind im Vergleich zum Stand der Technik kostengünstiger und bieten vergleichsweise sicherere Prädiktionsergebnisse, da zum einen kontinuierlich ausgewertet wird und zum anderen die Messung an der tatsächlich im Einsatz befindlichen Leitung stattfindet (im Gegensatz zu Verfahren mit zusätzlichen Sensorelementen). Hieraus kann zuverlässig eine Degradierung der Leitung detektiert werden.

In einer Variante sind dazu in der Vorrichtung aus Messungen an entsprechenden Leitungen und unter entsprechenden Bedingungen in der Vergangenheit Degradationsverläufe gespeichert. Diese Degradationsverläufe weisen aussagekräftige Abschnitte oder Stellen auf und reichen von der Inbetriebnahme der Leitung bis zu deren Versagen. Durch Adaption der gespeicherten Degradationsverläufe durch entsprechende rechnerische Streckung/Stauchung, Neigung, Verschiebung um jeweilige Veränderliche in der elektronische Steuereinheit und/ oder dem Signalprozessor anhand der aussagekräftigen Abschnitte oder Stellen an einen aktuellen, aber noch nicht beim Versagen der Leitung angelangten Degradationsverlauf einer Leitung wird für deren Versagen oder ein anderes aussagekräftiges Ereignis in der Lebensdauer der Leitung ein Zeitraum oder ein Zeitpunkt, und ggf. eine Wahrscheinlichkeit ermittelt, mit der dieses Versagen oder das Ereignis eintritt.

Die elektronische Steuereinheit ist in einer Variante der Vorrichtung Teil des Signalprozessors oder von diesem separat als Teil der Vorrichtung mit diesem verbunden, um die erfassten Charakteristika zu empfangen und zu verarbeiten. In einer weiteren Variante ist die Vorrichtung in den Frequenzumrichter integriert oder nutzt dessen Teile und Funktionalitäten zur Ausführung der Messungen und deren Auswertung.

Ein hier offenbartes Verfahren dient zur Überwachung einer Speiseleitung einer von einem Frequenzumrichter gespeisten elektrischen Maschine, um Ausfall, Verschleiß und/oder Alterung der elektrischen Speiseleitung zu prädizieren. Dieses Verfahren umfasst die Schritte: Verlegen der elektrischen Speiseleitung um eine elektrische Maschine in einer industriellen Maschine oder Anlage oder in einem Land- oder Luftfahrzeug mit dem Frequenzumrichter zu verbinden.

Einrichten des Frequenzumrichters, um durch die elektrische Speiseleitung die elektrische Maschine mit einer ein- oder mehrphasigen Wechselspannung mit veränderbarer Spannungs-Amplitude und Pulsdauer zu beschicken, wobei eine Veränderung von Pulsdauer und/oder Spannungs-Amplitude der Wechselspannung dazu dient, eine Drehzahl oder ein Drehmoment der elektrischen Maschine zu verändern.

Bereitstellen jede Phase der Wechselspannung als eine Abfolge von Rechteckpulsen mit zur Speisung der elektrischen Maschine durch den der Frequenzumrichter.

Erfassen und Verarbeiten an einer oder zwischen zwei Adern der elektrischen Speiseleitung) anliegender Spannungssignale durch eine Erfassungs- und Auswerteeinrichtung, um aus den Spannungssignalen ein Maß für eine Auftrittswahrscheinlichkeit eines Ausfalls, Verschleißes und/oder einer Alterung der Leitung zu erhalten, und Ausgeben des erhaltenen Maßes an einer Ausgabe.

Die obenstehenden Varianten der Lösung sind zum Teil in Vorrichtungs-Terminologie offenbart. Es versteht sich, dass die hier offenbarten Lösungsvarianten auch als Verfahren offenbart und zu implementieren sind.

Ein hier offenbartes Verfahren zur Überwachung einer elektrischen Leitung, um Ausfall, Verschleiß und/oder Alterung der Leitung zu prädizieren, wird in einer Variante mit einer Vorrichtung der oben beschriebenen Art ausgeführt. Nach der Verlegung / Montage der Speiseleitung zwischen dem Frequenzumrichter und der elektrischen Maschine wird ein Referenz-Reflexionsprofil aufgezeichnet und abgespeichert.

## Kurzbeschreibung der Figuren

Weitere Merkmale, Eigenschaften, Vorteile, Zweckmäßigkeiten der Vorrichtungen und der Verfahrensweisen sind der nachfolgenden Beschreibung in Verbindung mit der Zeichnung zu entnehmen. Auch mögliche Abwandlungen werden für einen Fachmann anhand der nachstehenden Beschreibung deutlich, in der auf die beigefügten Zeichnungen Bezug genommen ist. Dabei zeigen die Fig. Ausführungsformen hier erörterter Vorrichtungen.

Hierbei zeigen:

Fig. 1 eine schematische Darstellung einer Anlage, die einen am Netz betriebenen Frequenzumrichter umfasst, an den eine externen Einflüssen ausgesetzte Speiseleitung angeschlossen ist, um eine elektrische Maschine anzusteuern;
Fig. 2 eine schematische Darstellung der an einer Phase der Speiseleitung anliegenden Spannung beim Ansteuern der elektrischen Maschine; und
Fig. 3 eine schematische vergrößerte Darstellung der an einer Phase der Speiseleitung anliegenden Spannung beim Ansteuern der elektrischen Maschine zu Beginn und zu fortgeschrittenen Zeiten des Betriebs der externen Einflüssen ausgesetzte Speiseleitung.

## Detaillierte Beschreibung von Varianten der Vorrichtungen und der Verfahrensweisen

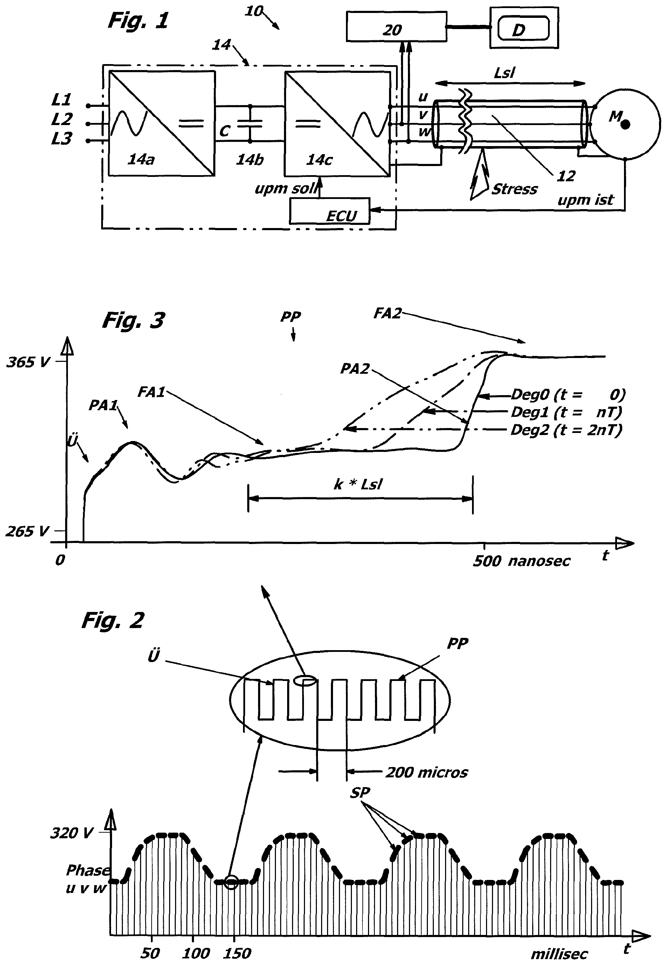

Fig. 1 veranschaulicht eine Vorrichtung 10 zur Überwachung einer mehradrigen Speiseleitung 12 einer frequenzumrichtergespeisten elektrischen Maschine M. Diese Vorrichtung 10 dient dazu, Ausfall, Verschleiß und/oder Alterung der elektrischen Speiseleitung 12 zu prädizieren. Die elektrische Speiseleitung 12 ist verlegt, um die elektrische Maschine M zum Beispiel in einer Werkzeugmaschine mit einem Frequenzumrichter 14 zu verbinden. Der Frequenzumrichter 14 beschickt durch die elektrische Speiseleitung 12 die elektrische Maschine M mit einer hier dreiphasigen Wechselspannung u v w. Die Wechselspannung uvw hat hier eine veränderbare Spannungs-Amplitude und veränderbare Pulsdauer. Eine Veränderung von Pulsdauer und/oder Spannungs-Amplitude der Wechselspannung $u\ v\ w$ dazu dient, eine Drehzahl oder ein Drehmoment der elektrischen Maschine $M$ zu verändern. Diese Veränderung wird durch Vorgabe von Ist-Drehzahlsignalen an eine elektronische Steuerung ECU aus der elektrischen Maschine und durch Ausgabe von Soll-Drehzahlsignalen an den Frequenzumrichter 14 bewirkt. Diese Ausgestaltung wird insbesondere bei Anlagen mit Encoder eingesetzt. Auch Ausgestaltungen ohne Rückführung eines Signals an die elektronische Steuerung ECU sind im Einsatz. Hierbei leitet die elektronische Steuerung ECU die Drehzahl / das Drehmoment aus den Motorparametern ab.

Der Frequenzumrichter 14 stellt jede Phase der Wechselspannung als Abfolge von Rechteckpulsen mit hoher Flankensteilheit zur Speisung der elektrischen Maschine. Eine Erfassungs- und Auswerteeinrichtung 20 erfasst in der hier gezeigten Variante zwischen zwei Adern *v, w* der elektrischen Speiseleitung 12 einen Verlauf der Spannungssignale um diesen zu verarbeiten. Die Erfassungs- und Auswerteeinrichtung 20 ist in einer nicht weiter veranschaulichten Variante mit der elektronische Steuerung *ECU* und/oder der Elektronik des Frequenzumrichters 14 baueinheitlich. Die Erfassungs- und Auswerteeinrichtung 20 ermittelt aus dem Verlauf der Spannungssignale an den Adern ein Maß für eine Auftrittswahrscheinlichkeit eines Ausfalls, Verschleißes und/oder einer Alterung der Speiseleitung 12. Das erhaltene Maß wird an einer Ausgabe D ausgegeben.

Die elektrische Maschine M ist hier ein innenlaufender Motor, der aus dem Frequenzumrichter 14 zum Beispiel als Synchron- oder Asynchron-Maschine betrieben wird.

Mit dieser Vorrichtung 10 und dem weiter unten im Detail dargestellten Verfahren ist eine Leitungsdiagnose der Speiseleitung 12 zu realisieren. Diese Speiseleitung 12 ist eine elektrisch leitende Kupferleitung, die externen Einflüssen Stress ausgesetzt ist, mit mehreren Adern, einer Sammelschirmung, Isolierschichten und Ummantelung. Diese Speiseleitung 12 bestromt die dreiphasige Maschine M, hier in Dreieckschaltung, als dreiadrige Leitung mit einem Masseanschluss an der Abschirmung.

Die Erfassungs- und Auswerteeinrichtung 20 ermittelt aus den ihr zugeführten Spannungssignalen aus den Adern der Speiseleitung 12 dort auftretenden Reflexionen. Diese Reflexionen treten bei Leitungsstörungen auf, wenn der (komplexe) Widerstand der Speiseleitung 12 nicht längshomogen ist, bzw. als Folge der Störung eine Funktion des Ortes wird. Da im Fall einer Degradation der Reflexionsfaktor an jeder beliebigen Stelle der Leitung entlang ihrer Länge unterschiedlich ist, ermittelt die Erfassungs- und Auswerteeinrichtung 20 aus den auftretenden Reflexionen den Ort der Leitungsstörung(en).

Entlang der Längserstreckung der Speiseleitung 12 ändert sich, durch Degradation während des Betriebs der Speiseleitung 12 hervorgerufen, der Reflexionsfaktor nicht linear. Hieraus ergibt sich das Reflexionsprofil der Speiseleitung 12. Dieses sich aus dem aus dem erfassten Verlauf der Spannungssignale ergebende Reflexionsprofil wird durch die Erfassungs- und Auswerteeinrichtung 20 bestimmt.

Der Frequenzumrichter 14 versorgt die elektrische Maschine (Synchron-, oder Asynchronmaschine) je nach Last drehzahlregelbar mit Strom. Dazu wandelt der Frequenzumrichter 14 die gleichförmige Netz-Wechselspannung (z.B. 400 Volt, 50 Hertz) mithilfe eines Gleichrichters zuerst in eine Gleichspannung des Zwischenkreisen und mithilfe eines Wechselrichters in eine pulsmodulierte Wechselspannung mit veränderbarer Amplitude und Pulsdauer, der Effektivwert dieser pulsmodulierten Wechselspannung entspricht der einer sinusförmigen Wechselspannung. Durch die Steuerung von Pulsdauer und Spannung ist eine stufenlose Regelung der Drehzahl oder des Drehmoments der elektrischen Maschine *M* möglich.

Der Frequenzumrichter 14 hat eingangsseitig eine Gleichrichter-Brückenschaltung 14a. Diese Gleichrichter-Brückenschaltung 14a wandelt die hier drei phasige Netz-Wechselspannung L1, L2, L3 in eine pulsierende Gleichspannung. Diese pulsierende Gleichspannung wird einem als Zwischenkreis bezeichneten Gleichspannungsstromkreis 14b durch einen Pufferkondensator C und ggf. eine Induktivität geglättet.

Eine dem Zwischenkreis 14b nachgeschaltete steuerbare Wechselrichterschaltung 14c wandelt die geglättete Spannung aus dem Zwischenkreis 14b in eine hier dreiphasige Drehspannung u, v, w. Jede Phase hat in der hier gezeigten Variante Rechteckpulse mit kurzer Pulslänge von z.B. ca. 20 $\mu$s - ca. 500 $\mu$s. Die Rechteckpulse haben eine hohe Flankensteilheit von z.B. ca. 100 V/$\mu$s - ca. 1000 V/$\mu$s und mehreren hundert Volt Puls-Amplitude, hier z.B. ca. 120 V - ca. 400 Volt zur Speisung der elektrischen Maschine M. Hierfür sind in der Wechselrichterschaltung 14c hier nicht im Detail veranschaulichte gesteuerte Halb- (oder Voll-)brücken-Schaltungen mit GTO-Thyristoren oder IGBT-Transistoren vorgesehen. Diese werden zeit- und phasenrichtig angesteuert, um eine Ist-Drehzahl *upm ist* der elektrischen Maschine *M* zu erreichen, basierend auch auf einem Drehzahlsoll-Signal *upm soll* oder einer anderen Kenngröße, zum Beispiel Drehmoment, aus der elektronischen Steuerung *ECU. Die* Steuerung *ECU* definiert ggf. aus externer, nicht weiter veranschaulichter Vorgabe Drehzahl, Drehmoment oder Speisestrom der elektrischen Maschine *M*.

Der Zustand der externen Einflüssen Stress ausgesetzten Speiseleitung 12 und damit auch das Maß für deren Ausfallwahrscheinlichkeit ist aus den in die elektrische Speiseleitung 12 durch den Frequenzumrichter 14 eingespeisten Rechteck-Spannungs-Pulsen durch die Erfassungs- und Auswerteeinrichtung 20 zu ermitteln. Die Rechteck-Spannungs-Pulse SP sind die als Betriebsenergie in die Speiseleitung 12 für die elektrische Maschine *M* eingespeisten Pulse. Das Reflexionsprofil der Speiseleitung 12 ist mittels der Erfassungs- und Auswerteeinrichtung 20 zu erfassen und auszuwerten. In dem Reflexionsprofil der Speiseleitung 12 sind damit Spannungs-Reflexionen infolge von Störstellen entlang der Speiseleitung 12 zu der angeschlossenen elektrischen Maschine *M* zu erfassen, da sich die Störstellen als Spannungssprünge in einer Phase *u, v, w* oder zwischen zwei Phasen *u, w* detektieren lassen.

Fig. 2 veranschaulicht die rechteckförmigen Spannungspulse SP, die in jeder der drei Phasen *u, v, w* der elektrischen Maschine *M* zugeführt werden. Dieses Impulsmuster ist am Ausgang des Frequenzumrichters 14 gemessen. Die in Fig. 2 erkennbare Wellenform wird den im Wesentlichen rechteckförmigen Spannungspulsen SP durch einen überlagerten Wellenzug aufgeprägt, der aus Umladevorgängen des Kondensators C im Zwischenkreis 14b herrührt. Dieser überlagerte Wellenzug hat in dieser Variante eine Periodendauer von etwa 6 millis. Die jeweils an den einzelnen Spannungspulsen SP auftretende weitere Pulsierung hat in dieser Variante eine Periodendauer von etwa 200 µs.

In Fig. 2 und 3 ist veranschaulicht, wie die oben genannten Spannungssprünge auftreten, und wie sie entstehen. Der Frequenzumrichter 14 liefert die drei Phasen *u, v, w-* bei nicht angeschlossener Speiseleitung 12 und ohne elektrische Maschine *M-* als rechteckförmige Spannungspulse. Diese Spannungssprünge treten bei - angeschlossener Speiseleitung 12 und mit elektrischer Maschine *M-* am Übergang *Ü* eines ersten Pulsanstiegs *PA1* des rechteckförmigen Spannungspulses in das Pulsplateau *PP* auf. Diese Spannungssprünge sind - bei gegebener Leitung mit vorgegebener Länge und kapazitivem und induktivem Leitungsbelag - umso ausgeprägter, je größer der zeitliche Gradient des Spannungs-Pulses (ΔU / Δt) aus dem Frequenzumrichter 14 ist; sie werden durch die Erfassungs- und Auswerteeinrichtung 20 erfasst und ausgewertet.

Das Reflexionsprofil zeigt am Ende des Übergangs *Ü* mit dem ersten Pulsanstieg *PA1* eine Abnahme des Gradienten bei Übergang in das Pulsplateau. Das Pulsplateau *PP* hat anfänglich einen ersten Flachabschnitt *FA1*. Am Ende des ersten Flachabschnitts *FA1* folgt ein weiterer deutlicher Pulsanstieg *PA2* auf den zweiten Flachabschnitt *FA2* des Pulsplateaus *PP*. Die Zeitdauer *k * Ls/* des ersten Flachabschnitts *FA1* zwischen dem Ende des steilen Pulsanstiegs *PA1* zu dem Pulsanstieg am Ende des ersten Flachabschnitts *FA1* ist bei einer intakten, z.B. neuen Speiseleitung 12 repräsentativ für deren Länge *Ls/* zwischen dem Frequenzumrichter 14 und der elektrischen Maschine M. Dabei ist kein Faktor mit der Dimension m/s. Diese Zeitdauer wird in einer Variante der Vorrichtung durch die Erfassungs- und Auswerteeinrichtung 20 erfasst und ausgewertet.

Vom Ende des ersten Pulsanstiegs *PA1* beim Übergang in den ersten Flachabschnitt *FA1* beeinflusst die Leitungskapazität den Spannungsverlauf des Pulses. Im ersten Flachabschnitt *FA1* verläuft der Wellenwiderstand der Leitung im Wesentlichen konstant. Der Pulsanstieg *PA2* am Ende des ersten Flachabschnitts *FA1* repräsentiert die Reflexion des Pulses an der elektrischen Maschine *M*, genauer gesagt den Impedanz-Sprung an den Ständerspulen der elektrischen Maschine *M*; der Impedanz-Sprung wird in einer Variante der Vorrichtung 10 durch die Erfassungs- und Auswerteeinrichtung 20 erfasst und ausgewertet. Dieser zeitliche Abstand zwischen dem Übergang in den ersten Flachabschnitt *FA1* und dem Spannungs-Pulsanstieg am Ende des ersten Flachabschnitts *FA1* ist bei einer in Betrieb befindlichen Speiseleitung 12 ein Maß für die Leitungslänge. Bei einer fortschreitenden Degradation der Speiseleitung 12 treten innerhalb dieses Flachabschnitts, abweichend zum ursprünglich horizontalen Verlauf bei einer neuen Leitung, Spannungsüberhöhungen auf, die auf Reflexionen an wachsenden Störstellen hindeuten können. Eine solche Degradation der Speiseleitung 12 entlang der Strecke kann zu einem zeitlich früheren Pulsanstieg am Ende des ersten Flachabschnitts *FA1* führen. Dies kann zum Beispiel der Fall sein, wenn sich die Störung im Bereich des Leitungsendes befindet. Die Störung kann z.B. aber auch in der Mitte der Leitung entstehen, dann ergeben sich hierfür spezifische Verläufe, mit einem früheren Pulsanstieg im Mittelbereich des ersten Flachabschnitts *FA1*.

Der (reale oder komplexe) Widerstand der Speiseleitung 12 steigt im Bereich einer Leitungsschwächung. An diesem erhöhten Widerstand / der erhöhten Impedanz der Speiseleitung 12 an dieser Stelle oder in diesem Bereich wird der Puls aus dem Frequenzumrichter 14 reflektiert und führt zu dem Pulsanstieg am Ende des ersten Flachabschnitts *FA1*. Damit verändert sich der erste Flachabschnitt *FA1* bis zum Pulsanstieg am Ende des ersten Flachabschnitts *FA1* gegenüber dem initial erfassten Verlauf der Spannungssignale. Aus dieser Veränderung errechnet die Erfassungs- und Auswerteeinrichtung 20 den Ort der Degradation der Speiseleitung 12. Bei einem Bruch der Speiseleitung 12 steigt der Spannungs-Puls steil bis an die maximale Amplitude (zweiter Flachabschnitt *FA2* des Pulsplateaus *PP*) auf. Daraus ergibt sich eine "elektrisch kürzere Länge" der Speiseleitung 12.Die Erfassungs- und Auswerteeinrichtung 20 wertet die Signale im Sinne eines Leitungsbruchs (zumindest nahezu vollständige Unterbrechung der Energieübertragung an die elektrische Maschine *M*), wenn die Speiseleitung 12 eine elektrisch kürzere als ihre Original-Länge *Ls/*hat. Dies veranschaulichen die Kurvenverläufe *Deg0, Deg1, Deg2* in der Fig. 3. Die Veränderung der Gestalt der Kurvenverläufe durch die Erfassungs- und Auswerteeinrichtung 20 erfasst und ausgewertet. Im veranschaulichten Beispiel ist die Schädigung der Speiseleitung 12 aus den Kurvenverläufen *Deg1* und *Deg2* ersichtlich; sie entsteht im letzten Drittel der Leitungslänge. Hier kann sich zum Beispiel ein Leitungsabschnitt der Speiseleitung 12 in einer Schleppkette befinden, in der er einer mechanischen Belastung ausgesetzt ist. Bei dem strichzweipunktiert dargestellten Kurvenverlauf *Deg2* steigt die Kurve stark an bis zum zweiten Flachabschnitt *FA2* an auf die maximale Amplitude. Hier ist von einem Bruch der Speiseleitung 12 auszugehen; die Leitung hat eine elektrisch kürzere Länge.

Die Erfassungs- und Auswerteeinrichtung 20 erfasst in einer ersten Betriebsphase, etwa unmittelbar nach der Installation bei erster Inbetriebnahme, Charakteristika der Speiseleitung 12 und speichert diese ab. Diese Charakteristika umfassen zum Beispiel die Veränderungen der Verläufe der Spannungssignale. Diese Veränderungen werden mit jeweils zugehörigen abgespeicherten Schwellenwerten sowie deren Anzahl abgespeicherter zulässiger Über-/Unterschreitungen, und /oder einem Messprofil mit einem Referenz-Reflexionsprofil verglichen. Dies geschieht mit folgender Rechenvorschrift:

$$Char = \int_0^{L_{sl}} \left( U_{Puls_{akt(l)}} - U_{Puls_{ref(l)}} \right)^2 dl$$

Dabei ist *Char* das Integral über die quadrierte Differenz der aktuellen Spannung des Pulses $U_{Puls_{akt(l)}}$ während des Betriebs und der Referenz-Spannung $U_{Puls_{ref(l)}}$ über die Länge 0 ... $L_l$ der Leitung. In Abhängigkeit der Anwendung und der Leitungslänge sind die Schwellen- oder Grenzwerte gesetzt, um eine Degradation oder eine Aufforderung zum Tausch der Leitung rechtzeitig zu signalisieren.

Bei einer anderen Art der Auswertung dient die Initialmessung ebenfalls als Referenzprofil, das für jede Leitungsader erfasst und abgespeichert wird. Das Spannungsniveau des ersten Flachabschnitts *FA1* wird als 100%-Wert gesetzt und entspricht einer intakten Speiseleitung 12. Das Spannungsniveau des zweiten Flachabschnitts *FA2* wird als 0%-Wert gesetzt und entspricht einer defekten Speiseleitung 12. Im Verlauf der Degradation der Speiseleitung 12 treten in Bereichen, in denen eigentlich das Spannungsniveau des ersten Flachabschnitts *FA1* herrschen sollte, Spannungspulse mit einer Amplitude zwischen dem Spannungsniveau des zweiten Flachabschnitts *FA2* und dem Spannungsniveau des ersten Flachabschnitts *FA1* auf. Überschreiten diese Amplituden ein vorbestimmtes Niveau, zum Beispiel 70%, wertet dies die Erfassungs- und Auswerteeinrichtung 20, sollte es eine ebenfalls vorbestimmte Anzahl von Malen innerhalb einer Messperiode auftreten, ebenfalls als nicht mehr hinnehmbare Alterung und signalisiert dies entsprechend.

Die vorangehend beschriebenen Varianten der Vorrichtung, deren Aufbau- und Betriebsaspekte, sowie die Varianten der Verfahrensweise dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch und Proportionen nicht einschränken. Dabei sind wesentliche Eigenschaften und Effekte zum Teil deutlich vergrößert dargestellt, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

**Patentansprüche**

1. Eine Vorrichtung (10) zur Überwachung einer Speiseleitung (12) einer vom einem Frequenzumrichter (14) gespeisten elektrischen Maschine (M), um Ausfall, Verschleiß und/oder Alterung der elektrischen Speiseleitung (12) aus einer zum Betrieb der elektrischen Maschine (M) durch den Frequenzumrichter (14) eingespeisten Abfolge von Rechteckpulsen zu prädizieren, wobei

   - die elektrische Speiseleitung (12) dazu eingerichtet und verlegt ist, eine elektrische Maschine (M) in einer industriellen Maschine oder Anlage oder in einem Land- oder Luftfahrzeug mit dem Frequenzumrichter (14) zu verbinden, und
   - der Frequenzumrichter (14) dazu eingerichtet und bestimmt ist, durch die elektrische Speiseleitung (12) die elektrische Maschine (M) mit einer ein- oder mehrphasigen Wechselspannung (u, v, w) mit veränderbarer Spannungs-Amplitude und Pulsdauer zu beschicken, wobei eine Veränderung von Pulsdauer und/oder Spannungs-Amplitude der Wechselspannung (u, v, w) dazu dient, eine Drehzahl oder ein Drehmoment der elektrischen Maschine (M) zu verändern,
   - der Frequenzumrichter (14) dazu eingerichtet und bestimmt ist, jede Phase der Wechselspannung (u, v, w) als die Abfolge von Rechteckpulsen mit hoher Flankensteilheit zur Speisung der elektrischen Maschine (M) bereitzustellen, und wobei eine Erfassungs- und Auswerteeinrichtung (20) dazu eingerichtet und programmiert ist,

      -- am Ausgang des Frequenzumrichters an einer oder zwischen zwei Adern der elektrischen Speiseleitung (12) Spannungssignale zu erfassen und zu verarbeiten, um aus den Spannungssignalen ein Maß für eine Auftrittswahrscheinlichkeit eines Ausfalls, Verschleißes und/oder einer Alterung der Leitung zu erhalten, und
      -- das erhaltene Maß an einer Ausgabe (D) auszugeben.

2. Die Vorrichtung (10) nach Anspruch 1, wobei die elektrische Maschine (M) als eine innen- oder außenlaufende Synchron- oder Asynchron-Maschine ausgestaltet ist, und/oder wobei die Speiseleitung (12) eine metallisch leitende Kupfer-Leitung oder -Kabel mit einer oder mehreren Adern oder Aderpaaren gleichen oder unterschiedlichen Querschnitts, Einzel- oder Sammelschirmung, Isolierschichten und/oder Ummantelungen ist, und/oder wobei die Speiseleitung (12) für eine einphasige elektrische Maschine (M) als Zweileiteranordnung, und für eine dreiphasige elektrische Maschine (M) mit drei Adern und einer Masseleitung ausgestaltet ist; und/oder

wobei die Erfassungs- und Auswerteeinrichtung (20) dazu eingerichtet und programmiert ist, an einer oder zwischen zwei Adern der elektrischen Speiseleitung (12) aus den erfassten Spannungssignalen Spannungs-Pulse aus dem Frequenzumrichter und durch Reflexionen in der elektrischen Speiseleitung (12) den Spannungs-Pulsen überlagerte Pulse auszuwerten um ein sich aus dem erfassten Verlauf der Spannungssignale ergebendes Reflexionsprofil zu bestimmen; und/oder

wobei der Frequenzumrichter (14) dazu eingerichtet ist, die elektrische Maschine (M) mit elektrischer Energie zu versorgen, indem im Wesentlichen gleichförmige Netz-Wechselspannung in eine Wechselspannung mit veränderbarer Amplitude und Pulsdauer gewandelt wird und über die Speiseleitung (12) der elektrischen Maschine (M) zugeführt wird, wobei durch Steuerung von Pulsdauer und Spannung zugeführter Spannungs-Pulse Drehzahl oder Drehmoments der elektrischen Maschine (M) veränderbar sind; und/oder wobei

der Frequenzumrichter (14) eingangsseitig eine Gleichrichter-Schaltung (14a) hat, die dazu eingerichtet ist, eingehende Netz-Wechselspannung mit einer oder mehreren Phasen (L1, L2, L3) in eine pulsierende Gleichspannung zu wandeln, und/oder wobei der Gleichrichter-Schaltung (14a) ein Zwischenkreis (14b) nachgeordnet ist, der die pulsierende Gleichspannung glättet; und/oder wobei dem Zwischenkreis (14b) eine steuerbare Wechselrichterschaltung (14c) nachgeordnet ist, die dazu eingerichtet ist, die geglättete Spannung aus dem Zwischenkreis (14b) in eine ein- oder mehr-phasige Drehspannung (u, v, w) zu wandeln, wobei jede Phase Rechteckpulse mit einer Pulslänge von etwa 20 µs - 500 µs, einer hohen Flankensteilheit von etwa 100 V/µs - etwa 1000 V/ps, und einer Puls-Amplitude im Bereich von Nieder-, Mittel- oder Hochspannung zur Speisung der elektrischen Maschine (M) hat; und/oder wobei die Erfassungs- und Auswerteeinrichtung (20) den Zustand der Leitung aus den in die elektrische Speiseleitung (12) durch den Frequenzumrichter (14) eingespeisten Spannungs-Pulsen ermittelt, wobei die Erfassungs- und Auswerteeinrichtung (20) ein Reflexionsprofil der Leitung (12) ermittelt und ausgewertet; und/oder wobei die Erfassungs- und Auswerteeinrichtung (20) die Störstellen als Spannungssprünge in einer Phase gegen Masse oder zwischen zwei Phasen erfasst und auswertet, wobei sie insbesondere solche Spannungssprünge auswertet, die bei im Wesentlichen rechteckförmigen Pulsen am Übergang (aa) des steilen Pulsanstiegs (PA1) in ein Pulsplateau auftreten, und/oder die bei im Wesentlichen rechteckförmigen Pulsen am Übergang eines Pulsplateaus (aa) in einen steilen Pulsabfall auftreten; und/oder wobei die Erfassungs- und Auswerteeinrichtung (20) am Ende des steilen Pulsanstiegs (PA) eine Abnahme des Gradienten bei Übergang in das erste Pulsplateau (PP1) erfasst und auswertet; und/oder wobei die Erfassungs- und Auswerteeinrichtung (20)

- einen anfänglichen ersten Flachabschnitt (FA1) des Pulsplateaus (PP) erfasst und auswertet, und/oder
- am Ende des ersten Flachabschnitts (FA1) einen weiteren Pulsanstieg (PA2) auf einen zweiten Flachabschnitt (FA2) des Pulsplateaus (PP) erfasst und auswertet, und dabei
- die Länge der Zeitdauer des ersten Flachabschnitts (FA1) zwischen dem Ende des steilen Pulsanstiegs (PA1) zu dem weiteren Pulsanstieg (PA2) am Ende des ersten Flachabschnitts (FA1) bei einer intakten Speiseleitung (12) als repräsentatives Maß für deren Länge zwischen dem Frequenzumrichter (14) und der elektrischen Maschine (M) wertet; und/oder

wobei die Erfassungs- und Auswerteeinrichtung (20)

- den weiteren Pulsanstieg (PA2) am Ende des ersten Flachabschnitts (FA1) als Reflexion des Pulses an der elektrischen Maschine (M) wertet, und den zeitlichen Abstand zwischen dem Übergang in den ersten Flachabschnitt (FA1) und den weiteren Pulsanstieg (PA2) am Ende des ersten Flachabschnitts (FA1) bei einer in Betrieb befindlichen Leitung als ein Maß für den Ort und das Ausmaß eines Ausfalls, Verschleißes und/oder einer Alterung der Speiseleitung (12) wertet, und dabei
- eine Verkürzung des ersten Flachabschnitts (FA1) bis zum weiteren Pulsanstieg (PA2) am Ende des ersten Flachabschnitts (FA1) gegenüber dem initial erfassten Verlauf der Spannungssignale als repräsentatives Maß für den Ort oder den Bereich der Degradation der Speiseleitung (12) wertet; und/oder

wobei die Erfassungs- und Auswerteeinrichtung (20)

- eine Erfassung einer elektrisch kürzeren Länge der Speiseleitung (12) als die vorher ermittelte elektrische Länge der Speiseleitung (12) in deren intaktem Zustand als einen Leitungsbruch wertet; und/oder

wobei die Erfassungs- und Auswerteeinrichtung (20)

- einen sanften, über die Betriebsdauer zunehmenden und/oder zunehmend steileren Anstieg aus dem ersten Flachabschnitt gegenüber dem initial erfassten Verlauf der Spannungssignale als repräsentatives Maß für den Ort oder den Bereich der Degradation der Speiseleitung (12) wertet.

3. Die Vorrichtung (10) nach einem der Ansprüche 1 bis 2, wobei die Erfassungs- und Auswerteeinrichtung (20)

- einen über die Betriebsdauer abnehmenden und/oder steileren Abfall aus dem ersten Flachabschnitt gegenüber dem initial erfassten Verlauf der Spannungssignale als repräsentatives Maß für den Ort oder den Bereich der Degradation der Speiseleitung (12) wertet.

4. Die Vorrichtung (10) nach einem der Ansprüche 1 bis 3, wobei der Erfassungs- und Auswerteeinrichtung (20)

- eine ein Maß für eine Drehzahl oder eine Anzahl von Umdrehungen nach einem Anlaufen der elektrischen Maschine (12) liefernde Datenerfassung zugeordnet ist, und/oder
- die Erfassungs- und Auswerteeinrichtung (20) dazu eingerichtet und ausgestaltet ist, ein Erfassen und Auswerten des Verlaufs der Spannungssignale bei einer vorzugebenden Drehzahl der elektrischen Maschine (12) zu beginnen.

5. Die Vorrichtung (10) nach einem der Ansprüche 1 bis 4, wobei die Erfassungs- und Auswerteeinrichtung (20)

- dazu eingerichtet und ausgestaltet ist, ein Erfassen und Auswerten des Verlaufs der Spannungssignale zwischen zwei Phasen (u, v, w) in einem Zeitabschnitt maximaler Differenz der Spannung zwischen beiden Phasen auszuführen.

6. Die Vorrichtung (10) nach einem der Ansprüche 1 bis 5, wobei die elektrische Maschine als ein Schrittmotor in einer Bauform als Reluktanz-, Permanentmagnet-, oder als Hybrid-Schrittmotor ausgestaltet ist, der als 2-, 3 oder 5-phasige, uni- oder bipolar im Normal-, Wavedrive- oder Halbschritt-, oder Mikroschritt-Betrieb anzusteuernde Maschine ausgestaltet sind, und/oder welcher aufgrund einer hohen Polzahl dazu ausgebildet ist, sehr genaue Winkelpositionen anzufahren.

7. Die Vorrichtung (10) nach einem der Ansprüche 1 bis 6, wobei der Frequenzumrichter einen Schrittmotorcontroller umfasst, welcher dazu ausgebildet ist durch Schalten steilflankiger Rechteckpulse einen Schrittmotor zu betreiben.

8. Die Vorrichtung (10) nach einem der Ansprüche 1 bis 7, wobei die Erfassungs- und Auswerteeinrichtung (20)

- in einer ersten Betriebsphase der Speiseleitung (12) deren Charakteristika ermittelt und abspeichert, und
- in einer zweiten Betriebsphase der Speiseleitung (12) deren abgespeicherte Charakteristika mit jeweils zugehörigen abgespeicherten Schwellenwerten sowie deren Anzahl abgespeicherter zulässiger Über-/Unterschreitungen, und /oder ein Messprofil mit einem Referenz-Reflexionsprofil vergleicht.

9. Die Vorrichtung (10) nach einem der Ansprüche 1 bis 8, wobei die Erfassungs- und Auswerteeinrichtung (20)

- in einer ersten Betriebsphase der Speiseleitung (12) als Charakteristikum ReferenzSpannungen als Referenz-Reflexionsprofil ermittelt und abspeichert, und
- in einer zweiten Betriebsphase der Speiseleitung (12) deren abgespeicherte Referenz-Spannungen des Referenz-Reflexionsprofils mit jeweils zugehörigen abgespeicherten Schwellenwerten sowie deren Anzahl abgespeicherter zulässiger Über-/Unterschreitungen mit einem aktuellen Betriebs-Messprofil vergleicht, und dabei vorzugsweise das Integral über die quadrierte Differenz der aktuellen Spannung des Pulses während des Betriebs und der Referenz-Spannung über die Länge der Leitung ermittelt.

10. Die Vorrichtung (10) nach einem der Ansprüche 1 bis 9, wobei die Erfassungs- und Auswerteeinrichtung (20)

- an entsprechenden Leitungen und unter entsprechenden Bedingungen in der Vergangenheit gemessene Degradationsverläufe gespeichert sind, die aussagekräftige Abschnitte oder Stellen aufweisen, und wobei die Erfassungs- und Auswerteeinrichtung (20) dazu eingerichtet und programmiert ist, durch Adaption dieser gespeicherten Degradationsverläufe mittels entsprechender rechnerischer Streckung/Stauchung, Neigung, Verschiebung um jeweilige Veränderliche anhand der gespeicherten aussagekräftigen Abschnitte oder Stellen an einen aktuellen, aber noch nicht beim Versagen der Leitung angelangten Degradationsverlauf einer Leitung anzupassen, um für ein Versagen oder ein anderes aussagekräftiges Ereignis in der Lebensdauer der Leitung einen Zeitraum oder einen Zeitpunkt, und ggf. eine Wahrscheinlichkeit zu ermitteln, zu dem dieses Versagen oder das Ereignis eintritt.

11. Die Vorrichtung (10) nach einem der Ansprüche 1 bis 10, wobei die Erfassungs- und Auswerteeinrichtung (20)

- an entsprechenden Leitungen und unter entsprechenden Bedingungen in der Vergangenheit gemessene Degradationsverläufe gespeichert sind, die aussagekräftige Abschnitte oder Stellen aufweisen, und wobei die Erfassungs- und Auswerteeinrichtung (20) dazu eingerichtet und programmiert ist, durch Mustererkennungsverfahren aus gespeicherten Degradationsverläufen um aus charakteristischen Abschnitten oder Stellen eines aktuellen, aber noch nicht beim Versagen der Leitung angelangten Degradationsverlauf einer Leitung im Vergleich zu einem oder mehreren gespeicherten Degradationsverläufen eine Prädiktion eines Versagens oder eines anderen aussagekräftigen Ereignisses in der Lebensdauer der Leitung zu liefern.

12. Die Vorrichtung (10) nach einem der Ansprüche 1 bis 11, wobei die Erfassungs- und Auswerteeinrichtung (20)

- zur Überwachung der elektrischen Speiseleitung (12) in der Betriebsphase bestimmt, ob das jeweilige Charakteristikum der elektrischen Speiseleitung (12) unterhalb oberer und/ oder oberhalb unterer Schwellenwerte liegt, im Ja-Fall das zeitlich nächste jeweilige Charakteristikum ermittelt, im Nein-Fall einen Zähler zum Vergleich mit der jeweiligen Anzahl abgespeicherter zulässiger Über-/Unterschreitungen ggf. innerhalb einem vorgegebenen Zeitintervall, erhöht, und im Erreichensfall einen Alarm aktiviert/ausgibt.

13. Die Vorrichtung (10) nach einem der Ansprüche 1 bis 12, wobei die Erfassungs- und Auswerteeinrichtung (20)

- zur Überwachung der elektrischen Speiseleitung (12) in der Betriebsphase abhängig davon, wie oft ein Alarm aktiviert wird, die Auftrittswahrscheinlichkeit des Ausfalls, Verschleißes und/oder der Alterung der elektrischen Speiseleitung (12) in verbleibende Schaltzyklen, restliche verbleibende Betriebszeit/Lebensdauer umgerechnet, indem die Charakteristika mit Referenz-Charakteristika aus der Vergangenheit, zum Beispiel aus einem Testlauf oder anderen im Betrieb befindlichen oder gewesenen Leitungen in Bezug setzt.

14. Die Vorrichtung nach einem der Ansprüche 1 bis 13, wobei die elektronische Steuereinheit (ECU) Teil des Signalprozessors (DSP) oder von diesem separat als Teil der Vorrichtung mit diesem verbunden ist, um die erfassten Charakteristika zu empfangen und zu verarbeiten.

15. Ein Verfahren zur Überwachung einer Speiseleitung (12) einer von einem Frequenzumrichter (14) gespeisten elektrischen Maschine (M), um Ausfall, Verschleiß und/oder Alterung der elektrischen Speiseleitung (12) aus einer zum Betrieb der elektrischen Maschine (M) durch den Frequenzumrichter (14) eingespeisten Abfolge von Rechteckpulsen zu prädizieren, mit den Schritten:

- Verlegen der elektrischen Speiseleitung (12) um eine elektrische Maschine (M) in einer industriellen Maschine oder Anlage oder in einem Land- oder Luftfahrzeug mit dem Frequenzumrichter (14) zu verbinden, und
- Einrichten des Frequenzumrichters (14), um durch die elektrische Speiseleitung (12) die elektrische Maschine (M) mit einer ein- oder mehrphasigen Wechselspannung (u, v, w) mit veränderbarer Spannungs-Amplitude und Pulsdauer zu beschicken, wobei eine Veränderung von Pulsdauer und/oder Spannungs-Amplitude der Wechselspannung (u, v, w) dazu dient, eine Drehzahl oder ein Drehmoment der elektrischen Maschine (M) zu verändern,
- Bereitstellen jeder jede Phase der Wechselspannung (u, v, w) als eine Abfolge von Rechteckpulsen mit zur Speisung der elektrischen Maschine (M) durch den der Frequenzumrichter (14), und wobei
- Erfassen und Verarbeiten an einer oder zwischen zwei Adern der elektrischen Speiseleitung (12) anliegender Spannungssignale durch eine Erfassungs- und Auswerteeinrichtung (20), um aus den Spannungssignalen ein Maß für eine Auftrittswahrscheinlichkeit eines Ausfalls, Verschleißes und/oder einer Alterung der Leitung zu erhalten, und
- Ausgeben des erhaltenen Maßes an einer Ausgabe (D).

## Claims

1. A device (10) for monitoring a supply line (12) of an electrical machine (M) fed by a frequency converter (14) in order to predict failure, wear and/or ageing of the electrical supply line (12) from a sequence of square pulses fed by the frequency converter (14) for operating the electrical machine (M), wherein

   - the electrical supply line (12) is arranged and routed to connect an electrical machine (M) in an industrial machine or plant or in a land or air vehicle to the frequency converter (14), and
   - the frequency converter (14) is arranged and intended to feed the electrical machine (M) with a single-phase or multi-phase AC voltage (u, v, w) with variable voltage amplitude and pulse duration through the electrical supply line (12), wherein a change in pulse duration and/or voltage amplitude of the alternating voltage (u, v, w) is used to change a speed or torque of the electric machine (M),
   - the frequency converter (14) is set up and intended to provide each phase of the AC voltage (u, v, w) as a sequence of square-wave pulses with a high edge steepness for feeding the electrical machine (M), and wherein

   a detection and evaluation device (20) is set up and programmed to

   -- detect and process voltage signals at the output of the frequency converter on one or between two wires of the electrical supply line (12) in order to obtain from the voltage signals a measure of a probability of occurrence of a failure, wear and/or ageing of the line, and
   -- output the measure obtained at an output (D).

2. The device (10) according to claim 1, wherein the electrical machine (M) is configured as an internally or externally running synchronous or asynchronous machine, and/or

   wherein the supply line (12) is a metallically conductive copper line or cable with one or more cores or core pairs of the same or different cross-section, individual or collective shielding, insulating layers and/or sheathing, and/or
wherein the supply line (12) for a single-phase electrical machine (M) is configured as a two-wire arrangement, and for a three-phase electrical machine (M) is configured with three wires and a ground line; and/or
wherein the detection and evaluation device (20) is set up and programmed to evaluate voltage pulses from the frequency converter from the detected voltage signals and pulses superimposed on the voltage pulses by reflections in the electrical supply line (12) at one or between two wires of the electrical supply line (12) in order to determine a reflection profile resulting from the detected course of the voltage signals; and/or
wherein the frequency converter (14) is arranged to supply the electrical machine (M) with electrical energy by converting substantially uniform mains AC voltage into an AC voltage with variable amplitude and pulse duration and supplying it to the electrical machine (M) via the supply line (12), wherein the speed or torque of the electrical machine (M) can be varied by controlling the pulse duration and voltage of supplied voltage pulses; and/or
wherein the frequency converter (14) has on the input side a rectifier circuit (14a) which is set up to convert incoming mains AC voltage with one or more phases (L1, L2, L3) into a pulsating DC voltage, and/or wherein the rectifier circuit (14a) is followed by an intermediate circuit (14b) which smoothes the pulsating DC voltage; and/or wherein the intermediate circuit (14b) is followed by an intermediate circuit (14b), which smoothes the pulsating DC voltage; and/or wherein a controllable inverter circuit (14c) is arranged downstream of the intermediate circuit (14b), which is set up to convert the smoothed voltage from the intermediate circuit (14b) into a single-phase or multi-phase three-phase voltage (u, v, w), each phase having square-wave pulses with a pulse length of about 20 μs - 500 μs, a high edge steepness of about 100 V/μs - about 1000 V/ps, and a pulse amplitude in the range of low, medium or high voltage for feeding the electrical machine (M); and/or
wherein the detection and evaluation device (20) determines the state of the line from the voltage pulses fed into the electrical supply line (12) by the frequency converter (14), wherein the detection and evaluation device (20) determines and evaluates a reflection profile of the line (12); and/or
wherein the detection and evaluation device (20) detects and evaluates the interference points as voltage jumps in a phase to ground or between two phases, wherein it evaluates in particular such voltage jumps which occur in substantially rectangular pulses at the transition (aa) of the steep pulse rise (PA1) into a pulse plateau, and/or which occur in substantially rectangular pulses at the transition of a pulse plateau (aa) into a steep pulse fall; and/or
wherein the detection and evaluation device (20) detects and evaluates a decrease in the gradient at the end of the steep pulse rise (PA) upon transition into the first pulse plateau (PP1); and/or
wherein the detection and evaluation device (20)

- detects and evaluates an initial first flat section (FA1) of the pulse plateau (PP), and/or
- detects and evaluates a further pulse rise (PA2) to a second flat section (FA2) of the pulse plateau (PP) at the end of the first flat section (FA1), and in doing so
- evaluates the length of the time duration of the first flat section (FA1) between the end of the steep pulse rise (PA1) to the further pulse rise (PA2) at the end of the first flat section (FA1) with an intact supply line (12) as a representative measure of its length between the frequency converter (14) and the electrical machine (M); and/or

wherein the detection and evaluation device (20)

- evaluates the further pulse rise (PA2) at the end of the first flat section (FA1) as a reflection of the pulse at the electrical machine (M), and evaluates the time interval between the transition into the first flat section (FA1) and the further pulse rise (PA2) at the end of the first flat section (FA1) in the case of a line in operation as a measure of the location and extent of a failure, a shortening of the first flat section (FA1) up to the further pulse rise (PA2) at the end of the first flat section (FA1) compared to the initially detected course of the voltage signals as a representative measure of the location or the range of degradation of the supply line (12); and/or wherein the detection and evaluation device (20)
- evaluates a detection of an electrically shorter length of the feed line (12) than the previously determined electrical length of the supply line (12) in its intact state as a line break; and/or

wherein the detection and evaluation device (20)

- evaluates a gentle, increasing and/or increasingly steeper rise from the first flat section over the operating time compared to the initially detected course of the voltage signals as a representative measure of the location or range of degradation of the supply line (12).

3. The device (10) according to any one of claims 1 to 2, wherein the detection and evaluation device (20)

- evaluates a decreasing and/or steeper drop from the first flat section over the operating time compared to the initially detected course of the voltage signals as a representative measure of the location or range of degradation of the supply line (12).

4. The device (10) according to any one of claims 1 to 3, wherein the detection and evaluation device (20) is assigned

- a data detection means which provides a measure of a rotational speed or a number of revolutions after the electrical machine (12) has started up, and/or
- the detection and evaluation device (20) is set up and configured to start detecting and evaluating the profile of the voltage signals at a predefined rotational speed of the electrical machine (12).

5. The device (10) according to any one of claims 1 to 4, wherein the detection and evaluation device (20)

- is set up and configured to carry out a detection and evaluation of the course of the voltage signals between two phases (u, v, w) in a time period of maximum difference of the voltage between both phases.

6. The device (10) according to any one of claims 1 to 5, wherein the electric machine is configured as a stepper motor in a reluctance, permanent magnet or hybrid stepper motor design, which is configured as a 2-, 3- or 5-phase, unipolar or bipolar machine to be controlled in normal, wavedrive or half-step or microstep operation, and/or which is configured to approach very precise angular positions due to a high number of poles.

7. The apparatus (10) according to any one of claims 1 to 6, wherein the frequency converter comprises a stepper motor controller adapted to operate a stepper motor by switching steep-edged square pulses.

8. The device (10) according to any one of claims 1 to 7, wherein the detection and evaluation device (20)

- in a first operating phase of the supply line (12) determines and stores its characteristics, and
- in a second operating phase of the supply line (12) compares its stored characteristics with respectively associated stored threshold values as well as its number of stored permissible overshoots/undershoots, and/or compares a measurement profile with a reference reflection profile.

9. The device (10) according to any one of claims 1 to 8, wherein the detection and evaluation device (20)

   - in a first operating phase of the supply line (12), determining and storing reference voltages as a reference reflection profile as a characteristic, and
   - in a second operating phase of the supply line (12), comparing its stored reference voltages of the reference reflection profile with respectively associated stored threshold values as well as its number of stored permissible overshoots/undershoots with a current operating measurement profile, and thereby preferably determining the integral over the squared difference of the current voltage of the pulse during operation and the reference voltage over the length of the line.

10. The device (10) according to any one of claims 1 to 9, wherein the detection and evaluation device (20)

    - degradation curves which have been measured on corresponding lines and under corresponding conditions in the past and which have significant sections or locations are stored, and wherein the detection and evaluation device (20) is set up and programmed to adapt these stored degradation curves by means of corresponding computational stretching/compression, inclination, displacement by respective variables on the basis of the stored significant sections or points to a current degradation course of a line which has not yet reached the failure of the line, in order to determine for a failure or another significant event in the service life of the line a period of time or a point in time and, if appropriate, a probability at which this event will occur.

11. The device (10) according to any one of claims 1 to 10, wherein in the detection and evaluation device (20)

    - degradation curves measured on corresponding lines and under corresponding conditions in the past are stored, which have meaningful sections or locations, and wherein the detection and evaluation device (20) is set up and programmed for this purpose, to provide a prediction of a failure or of another significant event in the service life of the line from characteristic sections or locations of a current degradation course of a line, which has not yet reached the point of failure of the line, in comparison with one or more stored degradation courses, by means of pattern recognition procedures from stored degradation courses.

12. The device (10) according to any one of claims 1 to 11, wherein the detection and evaluation device (20)

    - for monitoring the electrical supply line (12) in the operating phase, determines whether the respective characteristic of the electrical supply line (12) is below upper and/or below lower threshold values, determines the next respective characteristic in time in the case of a yes, in the case of a no, increases a counter for comparison with the respective number of stored permissible overshoots/undershoots, if applicable within a predefined time interval, and activates/outputs an alarm in the case of an overshoot.

13. The device (10) according to any one of claims 1 to 12, wherein the detection and evaluation device (20)

    - for monitoring the electrical supply line (12) in the operating phase, depending on how often an alarm is activated, the probability of occurrence of failure, wear and/or ageing of the electrical supply line (12) is converted into remaining switching cycles, remaining operating time/lifetime by relating the characteristics to reference characteristics from the past, for example from a test run or other lines that are or have been in operation.

14. The apparatus of any one of claims 1 to 13, wherein the electronic control unit (ECU) is part of, or separately connected to, the signal processor (DSP) as part of the apparatus to receive and process the detected characteristics.

15. A method of monitoring a supply line (12) of an electrical machine (M) fed by a frequency converter (14) to predict failure, wear and/or ageing of the electrical feed line (12) from a sequence of square pulses fed by the frequency converter (14) to operate the electrical machine (M), comprising the steps of:

    - routing the electrical supply line (12) to connect an electrical machine (M) in an industrial machine or plant or in a land or air vehicle to the frequency converter (14), and
    - setting up the frequency converter (14) to supply the electrical machine (M) through the electrical supply line (12) with a single-phase or multi-phase alternating voltage (u, v, w) with variable voltage amplitude and pulse duration, wherein a variant of pulse duration and/or voltage amplitude of the AC voltage (u, v, w) serves to vary a speed or torque of the electric machine (M),

- providing each phase of the alternating voltage (u, v, w) as a sequence of square-wave pulses with for feeding the electric machine (M) by the frequency converter (14), and wherein

- detecting and processing voltage signals applied to one or between two wires of the electric supply line (12) by a detection and evaluation device (20), to obtain from the voltage signals a measure of an occurrence probability of a failure, wear and/or ageing of the line, and

- outputting the obtained measure at an output (D).

## Revendications

1. Un dispositif (10) pour surveiller une ligne d'alimentation (12) d'une machine électrique (M) alimentée par un convertisseur de fréquence (14) afin de prédire la défaillance, l'usure et/ou le vieillissement de la ligne d'alimentation électrique (12) à partir d'une séquence d'impulsions carrées alimentée par le convertisseur de fréquence (14) pour faire fonctionner la machine électrique (M), dans lequel

- la ligne d'alimentation électrique (12) est adaptée et posée pour relier une machine électrique (M) dans une machine ou installation industrielle ou dans un véhicule terrestre ou aérien au convertisseur de fréquence (14), et

- le convertisseur de fréquence (14) est adapté et destiné à cet effet, d'alimenter la machine électrique (M) par la ligne d'alimentation électrique (12) avec une tension alternative monophasée ou polyphasée (u, v, w) avec une amplitude de tension et une durée d'impulsion variables, une modification de la durée d'impulsion et/ou de l'amplitude de tension de la tension alternative (u, v, w) servant à , modifier une vitesse de rotation ou un couple de la machine électrique (M),

- le convertisseur de fréquence (14) est conçu et déterminé pour fournir chaque phase de la tension alternative (u, v, w) sous la forme de la succession d'impulsions rectangulaires à pente de flanc élevée pour alimenter la machine électrique (M), et dans lequel un dispositif de détection et d'évaluation (20) est conçu et programmé pour

-- détecter et traiter des signaux de tension à la sortie du convertisseur de fréquence sur un ou entre deux conducteurs de la ligne d'alimentation électrique (12), afin d'obtenir à partir des signaux de tension une mesure d'une probabilité d'apparition d'une défaillance, d'une usure et/ou d'un vieillissement de la ligne, et

-- délivrer la mesure obtenue sur une sortie (D).

2. Le dispositif (10) selon la revendication 1, dans lequel la machine électrique (M) est conçue comme une machine synchrone ou asynchrone fonctionnant à l'intérieur ou à l'extérieur, et/ou dans lequel la ligne d'alimentation (12) est une ligne ou un câble en cuivre conducteur métallique avec un ou plusieurs fils ou paires de fils de section identique ou différente, blindage individuel ou collectif, de couches isolantes et/ou de gaines, et/ou dans lequel la ligne d'alimentation (12) pour une machine électrique monophasée (M) est conçue comme un dispositif à deux conducteurs, et pour une machine électrique triphasée (M) avec trois conducteurs et une ligne de masse; et/ou

le dispositif de détection et d'évaluation (20) étant conçu et programmé pour évaluer, sur un ou entre deux conducteurs de la ligne d'alimentation électrique (12), à partir des signaux de tension détectés, des impulsions de tension provenant du convertisseur de fréquence et des impulsions superposées aux impulsions de tension par des réflexions dans la ligne d'alimentation électrique (12), afin de déterminer un profil de réflexion résultant de la courbe détectée des signaux de tension; et/ou

le convertisseur de fréquence (14) étant conçu pour alimenter la machine électrique (M) en énergie électrique en transformant une tension alternative de réseau sensiblement uniforme en une tension alternative d'amplitude et de durée d'impulsion variables et en l'amenant à la machine électrique (M) par l'intermédiaire de la ligne d'alimentation (12), la vitesse de rotation ou le couple de la machine électrique (M) pouvant être modifiés par la commande de la durée d'impulsion et de la tension des impulsions de tension amenées; et/ou dans lequel

le convertisseur de fréquence (14) a, côté entrée, un circuit redresseur (14a) qui est conçu pour convertir la tension alternative de réseau entrante avec une ou plusieurs phases (L1, L2, L3) en une tension continue pulsée, et/ou un circuit intermédiaire (14b) qui lisse la tension continue pulsée est disposé en aval du circuit redresseur (14a); et/ou dans lequel

en aval du circuit intermédiaire (14b) est monté un circuit onduleur (14c) pouvant être commandé, qui est conçu pour convertir la tension lissée provenant du circuit intermédiaire (14b) en une tension triphasée (u, v, w) à une ou plusieurs phases, chaque phase ayant des impulsions rectangulaires avec une longueur d'impulsion d'environ 20 μs - 500 μs, une pente de flanc élevée d'environ 100 V/μs - environ 1000 V/ps, et une amplitude d'impulsion dans la plage de basse, moyenne ou haute tension pour alimenter la machine électrique (M); et/ou

le dispositif de détection et d'évaluation (20) déterminant l'état de la ligne à partir des impulsions de tension injectées dans la ligne d'alimentation électrique (12) par le convertisseur de fréquence (14), le dispositif de détection et d'évaluation (20) déterminant et évaluant un profil de réflexion de la ligne (12); et/ou

le dispositif de détection et d'évaluation (20) détectant et évaluant les points de perturbation en tant que sauts de tension dans une phase par rapport à la masse ou entre deux phases, en évaluant en particulier les sauts de tension qui se produisent dans le cas d'impulsions sensiblement rectangulaires à la transition (aa) de la montée d'impulsion abrupte (PA1) en un plateau d'impulsion, et/ou qui se produisent dans le cas d'impulsions sensiblement rectangulaires à la transition d'un plateau d'impulsion (aa) en une chute d'impulsion abrupte; et/ou

le dispositif de détection et d'évaluation (20) détectant et évaluant, à la fin de la montée d'impulsion abrupte (PA), une diminution du gradient lors du passage dans le premier plateau d'impulsion (PP1); et/ou

le dispositif de détection et d'évaluation (20)

- détecte et évalue une première section plate initiale (FA1) du plateau à impulsions (PP), et/ou
- à la fin de la première section plate (FA1), il détecte et évalue une autre montée d'impulsion (PA2) sur une deuxième section plate (FA2) du plateau d'impulsion (PP), et en l'occurrence
- évalue la longueur de la durée de la première section plate (FA1) entre la fin de la montée d'impulsion abrupte (PA1) et la montée d'impulsion supplémentaire (PA2) à la fin de la première section plate (FA1) dans le cas d'une ligne d'alimentation (12) intacte comme mesure représentative de sa longueur entre le convertisseur de fréquence (14) et la machine électrique (M); et/ou

le dispositif de détection et d'évaluation (20)

- évalue la montée d'impulsion supplémentaire (PA2) à la fin de la première section plate (FA1) comme réflexion de l'impulsion sur la machine électrique (M), et évalue l'intervalle de temps entre le passage dans la première section plate (FA1) et la montée d'impulsion supplémentaire (PA2) à la fin de la première section plate (FA1) dans le cas d'une ligne en service comme une mesure pour le lieu et l'étendue d'une panne, d'une usure et/ou d'un vieillissement de la ligne d'alimentation (12), et ce faisant

- évalue un raccourcissement du premier tronçon plat (FA1) jusqu'à la nouvelle augmentation d'impulsion (PA2) à la fin du premier tronçon plat (FA1) par rapport à l'évolution initialement détectée des signaux de tension comme une mesure représentative de l'endroit ou de la zone de dégradation de la ligne d'alimentation (12); et/ou

le dispositif de détection et d'évaluation (20)

- évalue une détection d'une longueur électrique plus courte de la ligne d'alimentation (12) que la longueur électrique précédemment déterminée de la ligne d'alimentation (12) dans son état intact comme une rupture de ligne ; et/ou le dispositif de détection et d'évaluation (20)
- évalue une augmentation douce, croissante sur la durée de fonctionnement et/ou de plus en plus raide à partir de la première section plate par rapport à la courbe initialement détectée des signaux de tension comme mesure représentative de l'endroit ou de la zone de dégradation de la ligne d'alimentation (12).

3. Le dispositif (10) selon l'une des revendications 1 à 2, dans lequel le dispositif de détection et d'évaluation (20)

- évalue une chute décroissante et/ou plus raide sur la durée de fonctionnement à partir de la première section plate par rapport à l'évolution initialement détectée des signaux de tension en tant que mesure représentative du lieu ou de la zone de dégradation de la ligne d'alimentation (12).

4. Le dispositif (10) selon l'une des revendications 1 à 3, dans lequel le dispositif d'acquisition et d'évaluation (20)

- est associé à une acquisition de données fournissant une mesure d'une vitesse de rotation ou d'un nombre de tours après un démarrage de la machine électrique (12), et/ou

- le dispositif d'acquisition et d'évaluation (20) est agencé et configuré pour commencer une acquisition et une évaluation de l'évolution des signaux de tension pour une vitesse de rotation prédéfinie de la machine électrique (12).

5. Le dispositif (10) selon l'une des revendications 1 à 4, dans lequel le dispositif d'acquisition et d'analyse (20)

- est agencé et configuré pour effectuer une acquisition et une analyse de l'évolution des signaux de tension entre deux phases (u, v, w) dans un intervalle de temps de différence maximale de tension entre les deux phases.

6. Le dispositif (10) selon l'une des revendications 1 à 5, dans lequel la machine électrique est conçue comme un moteur pas à pas de type à réluctance, à aimant permanent ou hybride, qui est conçu comme une machine à 2, 3 ou 5 phases, unipolaire ou bipolaire, à commander en mode normal, en mode d'entraînement par ondes ou en mode demi-pas, ou en mode micro-pas, et/ou qui est conçu pour atteindre des positions angulaires très précises en raison d'un nombre élevé de pôles.

7. Le dispositif (10) selon l'une des revendications 1 à 6, dans lequel le convertisseur de fréquence comprend un contrôleur de moteur pas à pas qui est conçu pour faire fonctionner un moteur pas à pas en commutant des impulsions rectangulaires à flancs raides.

8. Le dispositif (10) selon l'une des revendications 1 à 7, dans lequel le dispositif d'acquisition et d'évaluation (20)

- dans une première phase de fonctionnement de la ligne d'alimentation (12), détermine et mémorise ses caractéristiques, et
- dans une deuxième phase de fonctionnement de la ligne d'alimentation (12), compare ses caractéristiques mémorisées avec des valeurs de seuil mémorisées respectivement associées ainsi que leur nombre de dépassements admissibles vers le haut/vers le bas mémorisés, et/ou un profil de mesure avec un profil de réflectance de référence.

9. Le dispositif (10) selon l'une des revendications 1 à 8, dans lequel le dispositif de détection et d'évaluation (20)

- dans une première phase de fonctionnement de la ligne d'alimentation (12), on détermine et on mémorise comme caractéristique des tensions de référence comme profil de réflexion de référence, et
- dans une deuxième phase de fonctionnement de la ligne d'alimentation (12), on compare ses tensions de référence mémorisées du profil de réflexion de référence avec des valeurs de seuil mémorisées respectivement associées ainsi que leur nombre de dépassements vers le haut/vers le bas admissibles mémorisés avec un profil de mesure de fonctionnement actuel, et on calcule alors de préférence l'intégrale sur la différence au carré de la tension actuelle de l'impulsion pendant le fonctionnement et la tension de référence sur la longueur de la ligne.

10. Le dispositif (10) selon l'une des revendications 1 à 9, dans lequel le dispositif de détection et d'évaluation (20)

- des courbes de dégradation mesurées dans le passé sur des conduites correspondantes et dans des conditions correspondantes sont mémorisées, lesquelles présentent des sections ou des endroits significatifs, et le dispositif de saisie et d'évaluation (20) étant conçu et programmé pour, par adaptation de ces courbes de dégradation mémorisées au moyen d'un étirement/d'une compression calculé(e) correspondance), déterminer si une conduite est en train de se dégrader ou non, l'inclinaison, le déplacement autour de variables respectives à l'aide des sections ou des emplacements significatifs mémorisés, à une courbe de dégradation actuelle d'une conduite, mais qui n'est pas encore arrivée à la défaillance de la conduite, afin de déterminer, pour une défaillance ou un autre événement significatif dans la durée de vie de la conduite, une période ou un moment, et le cas échéant une valeur de probabilité. une probabilité que cette défaillance ou cet événement se produise.

11. Le dispositif (10) selon l'une des revendications 1 à 10, dans lequel le dispositif de détection et d'évaluation (20)

- des courbes de dégradation mesurées dans le passé sur des conduites correspondantes et dans des conditions correspondantes sont mémorisées, lesquelles présentent des sections ou des endroits significatifs, et le dispositif de saisie et d'évaluation (20) étant aménagé et programmé à cet effet, de fournir une prédiction d'une défaillance ou d'un autre événement significatif dans la durée de vie de la conduite par des procédés de reconnaissance de modèles à partir de courbes de dégradation mémorisées autour de sections ou d'emplacements caractéristiques d'une courbe de dégradation d'une conduite actuelle, mais qui n'a pas encore atteint la défaillance de la conduite, en comparaison avec une ou plusieurs courbes de dégradation mémorisées.

12. Le dispositif (10) selon l'une des revendications 1 à 11, dans lequel le dispositif d'acquisition et d'évaluation (20)

    - pour la surveillance de la ligne d'alimentation électrique (12) dans la phase de fonctionnement , détermine si la caractéristique respective de la ligne d'alimentation électrique (12) est inférieure à des valeurs de seuil supérieures et/ou supérieures à des valeurs de seuil inférieures, détermine dans le cas d'un oui la caractéristique respective suivante dans le temps, augmente dans le cas d'un non un compteur pour la comparaison avec le nombre respectif de dépassements supérieurs/inférieurs admissibles mémorisés, le cas échéant à l'intérieur d'un intervalle de temps prédéterminé, et active/émet une alarme dans le cas où elle est atteinte.

13. Le dispositif (10) selon l'une des revendications 1 à 12, dans lequel le dispositif d'acquisition et d'évaluation (20)

    - pour la surveillance de la ligne d'alimentation électrique (12) dans la phase de fonctionnement, en fonction du nombre de fois qu'une alarme est activée, on convertit la probabilité d'apparition de la défaillance, de l'usure et/ou du vieillissement de la ligne d'alimentation électrique (12) en cycles de commutation restants, en temps de fonctionnement restant/durée de vie, en mettant en relation les caractéristiques avec des caractéristiques de référence du passé, par exemple d'une marche d'essai ou d'autres lignes qui sont ou ont été en fonctionnement.

14. Le dispositif selon l'une quelconque des revendications 1 à 13, dans lequel l'unité de commande électronique (ECU) fait partie du processeur de signal (DSP) ou est séparée de celui-ci et reliée à celui-ci en tant que partie du dispositif, pour recevoir et traiter les caractéristiques détectées.

15. Un procédé de surveillance d'une ligne d'alimentation (12) d'une machine électrique (M) alimentée par un convertisseur de fréquence (14) afin de prédire la défaillance, l'usure et/ou le vieillissement de la ligne d'alimentation électrique (12) à partir d'une séquence d'impulsions carrées alimentée par le convertisseur de fréquence (14) pour faire fonctionner la machine électrique (M), comprenant les étapes consistant à :

    - poser la ligne d'alimentation électrique (12) pour relier une machine électrique (M) dans une machine ou installation industrielle ou dans un véhicule terrestre ou aérien au convertisseur de fréquence (14), et
    - configurer le convertisseur de fréquence (14) pour alimenter la machine électrique (M) par la ligne d'alimentation électrique (12) avec une tension alternative monophasée ou polyphasée (u, v, w) avec une amplitude de tension et une durée d'impulsion variables, une modification de la durée d'impulsion et/ou de l'amplitude de tension de la tension alternative (u, v, w) servant à modifier une vitesse de rotation ou un couple de la machine électrique (M),
    - la mise à disposition de chaque phase de la tension alternative (u, v, w) sous forme d'une succession d'impulsions rectangulaires avec pour l'alimentation de la machine électrique (M) par le convertisseur de fréquence (14), et dans lequel
    - la saisie et le traitement de signaux de tension appliqués à un ou entre deux conducteurs de la ligne d'alimentation électrique (12) par un dispositif de saisie et d'évaluation (20), pour obtenir, à partir des signaux de tension, une mesure d'une probabilité d'occurrence d'une panne, d'une usure et/ou d'un vieillissement de la ligne, et
    - délivrer la mesure obtenue à une sortie e (D).

**Fig. 1**

**Fig. 3**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1038140
- US 12820886 B
- DE 202017102410 U1
- DE 102013227051 B4
- DE 102018204171 A1
- EP 3199960 A1
- DE 102020111743 A1
- DE 112016006497 T5

- DE 10112844 A1
- US 6657437 B1
- EP 2157438 A1
- DE 102010000249 A1
- DE 102005055429 A1
- DE 102018204173 A1
- DE 102018204177 A1
- DE 102018204174 A1